# EUROPÄISCHE PATENTSCHRIFT

(11) **EP 3 610 712 B1**
(45) Veröffentlichungstag und Bekanntmachung des Hinweises auf die Patenterteilung: **20.04.2022**
(21) Anmeldenummer: 18189448.6
(22) Anmeldetag: 17.08.2018
(51) Int. Cl.: A01B 39/18, A01B 39/10

(54) **LANDWIRTSCHAFTLICHE QUERBEARBEITUNGSEINRICHTUNG**
AGRICULTURAL CROSS-PROCESSING DEVICE
DISPOSITIF DE TRAITEMENT TRANSVERSAL AGRICOLE

(43) Veröffentlichungstag der Anmeldung: 19.02.2020
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- CN-A- 103 081 597
- NL-C- 92 453

## Beschreibung

### TECHNISCHES GEBIET DER ERFINDUNG

Der Bedarf hinsichtlich einer mechanischen Bekämpfung von Bewuchs wie Unkraut ist in den letzten Jahren größer geworden, da die Zulassung von Unkrautvernichtungsmitteln stark eingeschränkt worden ist und auch Resistenzen von Unkräutern gegenüber Unkrautvernichtungsmitteln zunehmen. Bei dem Bewuchs kann es sich um Unkraut handeln. Ebenfalls möglich ist, dass es sich bei dem Bewuchs nicht um Unkraut, sondern um unerwünschte Pflanzen des Typs der Pflanzen einer Pflanzreihe oder auch anderer Pflanzen handelt, welche zwischen den regelmäßig angeordneten Pflanzen der Pflanzreihe angeordnet sind. Zwecks Vereinfachung wird im Folgenden teilweise auch ausschließlich von der Ausbildung des Bewuchses als Unkraut gesprochen, wovon dann aber auch anderweitiger Bewuchs umfasst sein soll. Unerwünschter Bewuchs zwischen Pflanzen einer Pflanzreihe führen zu Schäden und Ertragsverlusten, beispielsweise infolge der von dem Bewuchs aufgenommenen Nährstoffe oder des aufgenommenen, lediglich begrenzt zur Verfügung stehenden Wassers oder einer Abschattung der Pflanzen der Pflanzreihe. Möglich ist auch, dass über den Bewuchs Krankheiten, für welche der Bewuchs als Zwischenwirt dient, übertragen werden.

Die Erfindung betrifft eine landwirtschaftliche Querbearbeitungseinrichtung. Eine derartige Querbearbeitungseinrichtung dient zum Bearbeiten von zwischen Pflanzen einer Pflanzreihe angeordnetem Bewuchs zum Zweck, diesen Bewuchs mechanisch zu bearbeiten, zu durchtrennen und/oder hinsichtlich seines weiteren Wachstums zu beeinträchtigen. Hierbei besteht das Bearbeiten vorzugsweise in einem Querhacken, bei welchem ein Bearbeitungswerkzeug mit einer Stirnseite, Bearbeitungs- oder Hackfläche oder Schneide, deren (Flächen-) Normale in Querrichtung orientiert ist, mit dem Bewuchs in Wechselwirkung tritt. Möglich ist auch, dass das Bearbeitungswerkzeug insbesondere mit einem Fahrzeug in eine Längsrichtung der Pflanzreihe bewegt wird, womit das Bearbeitungswerkzeug mit einer Stirnseite, Bearbeitungs- oder Hackfläche oder Schneide, deren (Flächen-) Normale in Längsrichtung orientiert ist, mit dem Bewuchs in Wechselwirkung tritt. Hierbei kann auch eine Überlagerung der beiden vorgenannten Bearbeitungsweisen erfolgen. Hier und im Folgenden bezeichnet eine Längsrichtung die Ausrichtung einer Pflanzreihe und/oder die horizontale Bewegungsrichtung eines Fahrzeugs, an welchem die Querbearbeitungseinrichtung gehalten sein kann und mit welchem die Querbearbeitungseinrichtung entlang der Pflanzreihe bewegt werden, während die Querrichtung quer hierzu und ebenfalls horizontal orientiert ist.

### STAND DER TECHNIK

### Die Dissertation

"Kameragesteuerte mechanische Unkrautbekämpfung in Reihenkulturen", Matthias Müter, landwirtschaftliche Fakultät der rheinischen Friedrich-Wilhelms-Universität Bonn, 2017 (veröffentlicht unter hss.ulb.uni-bonn.de/2017/4836/ 4836.pdf; Datum der Einsichtnahme 08.08.2018)
gibt einen Überblick über mechanische Bearbeitungseinrichtungen. Die Dissertation beschreibt Einrichtungen und Verfahren zur Online-Erkennung von Positionen von Pflanzen und die Differenzierung zwischen Pflanzen und unerwünschtem Bewuchs wie Unkraut. Infolge von Abweichungen der Positionen der Pflanzen einer Pflanzreihe sowohl in Längsrichtung der Pflanzreihe als auch in Querrichtung von der Pflanzreihe erfolgt eine mechanische Bearbeitung zwischen den Pflanzen einer Pflanzreihe lediglich außerhalb eines vorher festgelegten Schutzbereiches rund um die Pflanzen, um Beschädigungen der Pflanzen zu vermeiden. Dies bedingt, dass keine Bearbeitung eines Bewuchses innerhalb des festgelegten Schutzbereiches um die Pflanzen erfolgt. Die Abweichungen der Positionen der Pflanzen von den Sollpositionen sind hierbei beispielsweise bedingt durch Ungenauigkeiten beim Säen der Pflanzen infolge der Säaggregate, einer Drift des Saatguts beim Ausbringen desselben aus dem Säaggregat u. ä. Die Dissertation beschreibt eine aktive Führung einer landwirtschaftlichen Querbearbeitungseinrichtung, bei der ein Erkennungssystem eine Unterscheidung der Pflanze von dem Bewuchs ermöglicht. Auf Grundlage dieser Unterscheidung erfolgt dann eine geregelte aktive Führung der Bewegung der landwirtschaftlichen Querbearbeitungseinrichtung. Hierzu kann ein autonomer Roboter eingesetzt werden. Beschrieben wird ein von Astrand & Baerveldt im Jahr 2002 beschriebener autonomer Roboter, bei dem eine Erkennungseinrichtung über eine Farbkamera und eine Bildanalysesoftware verfügt und ein schnell rotierendes Hackwerkzeug eingesetzt ist, welches entsprechend dem Ergebnis der Bildanalyse mittels eines Hydraulikzylinders zur Bearbeitung des Bewuchses abgesenkt oder zum Führen des Hackwerkzeugs über die Pflanze angehoben wird. Beschrieben wird des Weiteren ein System der Fachhochschule Osnabrück, bei dem das Bearbeitungswerkzeug einen um eine vertikale Achse rotierenden, hydraulisch angetriebenen Zylinder aufweist, von welchem sich nach unten über den Umfang des Zylinders verteilte Zinken erstrecken. Durch die Drehung des Zylinders und die Vorwärtsfahrt hinterlassen die Zinken ein zykloides Bearbeitungsmuster auf dem Ackerboden. Eine Veränderung des Musters soll durch Einschwenken einzelner Zinken ermöglicht werden, womit Pflanzen der Pflanzreihe gezielt geschont werden sollen. Eine weitere Beeinflussungsmöglichkeit soll über eine Veränderung der Drehzahl des Zylinders möglich sein. Eine Erkennungseinrichtung berücksichtigt hierbei neben dem Signal einer Kamera auch GNSS-Referenzdaten, die während der Aussaat gesammelt und in einer Datenbank gespeichert worden sind. Des Weiteren werden Systeme der Universität Wageningen und der Universität Cranfield beschrieben, bei welchen die Bearbeitungswerkzeuge rotierende Scheiben sind, die beidseitig der Pflanzenreihe parallel zur Erdoberfläche geführt werden. Eine als "Robovator" gekennzeichnete Querbearbeitungseinrichtung des Unternehmens F. Poulsen Engineering ApS, welche sowohl zwischen Pflanzreihen als auch zwischen Pflanzen einer Pflanzreihe arbeiten soll, verfügt über ein schnell in die Zwischenräume zwischen den Pflanzen einer Pflanzreihe bewegtes Hackmesser, dessen Bewegung mittels einer Erkennungseinrichtung gesteuert wird. Querbearbeitungseinrichtungen, wie diese beispielsweise von dem Unternehmen Ferrari Remoweed in 2013 auf die Agritechnica vorgestellt wurden oder die pneumatisch angesteuerte Querbearbeitungseinrichtung "Steketee IC-Cultivator", verfügen über zwei schneidende Hackwerkzeuge pro Seite. Die Hackmesser können hierbei auch als "Gänsefußschar" bezeichnet werden. Eine weitere Querbearbeitungseinrichtung, die am Institut für Landtechnik der Universität Bonn entwickelt worden ist, basiert auf einem Schrittmotor, welcher drei oder mehr an einer Nabe montierte Arme für eine Rotation der Nabe um eine horizontale Achse oberhalb der Reihen antreibt. Die Dissertation beinhaltet weitere detaillierte Informationen zu grundsätzlichen Möglichkeiten für die Ausgestaltung einer Erkennungseinrichtung für eine Erkennung der Pflanzen der Pflanzreihe einerseits und/oder des zwischen den Pflanzen der Pflanzreihe angeordneten Bewuchses andererseits. Hierbei kann beispielsweise eine Erkennung über mechanische Tastsensoren, eine Georeferenzierung der Positionen der Pflanzen auf Grundlage von Informationen während des Aussäens, auf Grundlage von Lichtschranken, auf Grundlage berührungslos arbeitender Abstandssensoren wie Ultraschall- oder Lasersensoren, eine Bildverarbeitung, beispielsweise mittels CMOS- oder CCD-Sensoren, pixelbasierte Photodetektoren mit zugeordneter Bildanalysesoftware erfolgen, wobei eine Zeilenkamera, eine Monochromkamera, eine Farbkamera, eine Infrarotkamera oder auch eine Multispektralkamera Einsatz finden kann. Hinsichtlich weiterer Details zu der Erkennungseinrichtung und der eingesetzten Auswertungsmöglichkeiten zur Gewinnung von Informationen hinsichtlich der Pflanzen und/oder des Bewuchses wird auf die Dissertation verwiesen.

### Weiterer Stand der Technik ist bspw. der Zeitschrift

Landtechnik 2/2004, S. 90 - 91 O. Schmittmann, P. Schulze Lammers: "Mechanische Unkrautbekämpfungsmaßnahmen", der Website https://www.dwu.de/123artikel1936_.html mit dem Titel "Sensorgesteuerte Querhacke" (Datum der Einsichtnahme 08.08.2018)
sowie den Vortragsunterlagen von
D. Trautz, M. Kohlbrecher, F. Langsenkamp: "Sensorgesteuerte Unkrautregulierung mittels Feldroboter im ökologischen Landbau (www.landwirtschaft.sachsen.de/landwirtschaft/download/20161019_Trautz, Datum des Downloads 08.08.2018)
zu entnehmen.

CN 103 081 597 A offenbart eine landwirtschaftliche Bearbeitungseinrichtung, mittels welcher Unkraut mitsamt des Wurzelwerks und der umgebenden Erde unterhalb der Oberfläche des Ackerbodens herausgeschnitten werden soll. Die Bearbeitungseinrichtung ist an dem Fahrzeug über eine Parallelführung angelenkt und über einem Rad am Ackerboden abgestützt, so dass die Bearbeitungseinrichtung dem konturierten Verlauf des Ackerbodens in vertikaler Richtung folgen kann. An der Parallelführung sind verdrehbar über parallele und vertikal orientierte Antriebswellen Bearbeitungsmesser gehalten. Ein hydraulischer, pneumatischer oder elektrischer Oszillationsantrieb treibt unter Zwischenordnung eines vier Zahnräder aufweisenden Getriebes gegenläufig die Antriebswellen und die Bearbeitungsmesser so an, dass diese oszillierend zwischen aktiven Stellungen und inaktiven Stellungen hin- und hergedreht werden. In den aktiven Stellungen der Bearbeitungsmesser sind diese koaxial zueinander angeordnet, womit die mit dem Ackerboden in Wechselwirkung tretenden Stirnseiten der Bearbeitungsmesser quer zur Bewegungsrichtung der Bearbeitungseinrichtung orientiert sind. In den inaktiven Stellungen sind die Bearbeitungsmesser um 90° gegenüber den aktiven Stellungen verdreht, womit die bearbeitenden Stirnseiten der Bearbeitungsmesser inaktiv sind und in Bewegungsrichtung der Bearbeitungseinrichtung orientiert sind. Die Bearbeitungswellen bilden jeweils eine Spindel aus, welche mit einer zugeordneten, an der Parallelführung fixierten Spindelmutter zusammenwirken. Die Spindeltriebe haben zur Folge, dass der oszillierenden Rotationsbewegung zwischen der aktiven Stellung und der inaktiven Stellung der Bearbeitungsmesser eine oszillierende Hubbewegung überlagert ist, womit die Bearbeitungsmesser in der aktiven Stellung eine abgesenkte Höhe einnehmen, in der diese unterhalb der Oberfläche des Ackerbodens angeordnet sind, und in der inaktiven Stellung eine angehobene Höhe oberhalb der Oberfläche des Ackerbodens einnehmen. Bei der Bewegung der Bearbeitungseinrichtung erfolgt eine Erfassung des Ackerbodens mit etwaigem darin wachsendem Unkraut durch eine Kamera. Mittels einer Bildverarbeitung erfolgt eine Bilderkennung, mittels welcher offensichtlich eine Erkennung eines in dem Ackerboden angeordneten Unkrauts erfolgen soll, sowie eine Positionsermittlung. Eine Steuereinheit treibt den Oszillationsantrieb derart an, dass die Bearbeitungsmesser bei dem Passieren von Unkraut aus der inaktiven Stellung und der angehobenen Höhe in die aktive Stellung und abgesenkte Höhe überführt werden, womit diese das Unkraut mit den Wurzeln und der umgebenden Erde aus dem Ackerboden heraustrennen.

### AUFGABE DER ERFINDUNG

Der Erfindung liegt die Aufgabe zugrunde, eine landwirtschaftliche Querbearbeitungseinrichtung zum Bearbeiten von zwischen Pflanzen einer Pflanzreihe angeordnetem Bewuchs vorzuschlagen, welche hinsichtlich
- des Antriebskonzepts,
- der Steuerungsmöglichkeiten,
- einer Berücksichtigung von mittels einer Erfassungseinrichtung erfassten Informationen zu Pflanzen einer Pflanzreihe und/oder zwischen den Pflanzen der Pflanzreihe angeordnetem Bewuchs,
- einer Verringerung einer nicht bearbeiteten Schutzzone um eine Pflanze der Pflanzreihe,
- einer Erhöhung der Zuverlässigkeit einer Vermeidung von Beschädigungen der Pflanzen der Pflanzreihe und/oder des Bearbeitens des Bewuchses verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt zunächst vor, in der Querbearbeitungseinrichtung, mittels welcher das Bearbeiten von zwischen Pflanzen einer Pflanzreihe angeordnetem Bewuchs erfolgen soll, ein besonderes Antriebs- und Bewegungskonzept für das Bearbeitungswerkzeug einzusetzen: Im Rahmen der Erfindung findet nicht ein kontinuierlich bewegtes Bearbeitungswerkzeug Einsatz wie beispielsweise eine rotierende Scheibe oder ein an einem rotierenden Zylinder gehaltenes fingerartiges Werkzeug mit einer Regelung der Rotationsgeschwindigkeit der Scheibe oder des Bearbeitungsfingers. Vielmehr findet ein Bearbeitungswerkzeug Einsatz, welches in Querrichtung oszillierend bewegbar ist. Hierbei verfügt die Bewegung des Bearbeitungswerkzeugs in Querrichtung zumindest über eine Bewegungskomponente in Querrichtung. Dabei kann das Bearbeitungswerkzeug gegenüber dem Gehäuse der Querbearbeitungseinrichtung oszillierend ausschließlich in Querrichtung bewegt werden. Möglich ist aber beispielsweise auch, dass eine Bewegung des Bearbeitungswerkzeugs auf einer Kreisbahn mit einem verhältnismäßig großen Radius erfolgt (wobei der Radius bspw. der Länge eines verschwenkten Arms entsprechen kann, an dem das Bearbeitungswerkzeug gehalten ist), so dass der Bewegung in Querrichtung eine von dem Schwenkwinkel des Bearbeitungswerkzeugs abhängige Komponente in Längsrichtung überlagert ist. Das Bearbeitungswerkzeug wird hierbei oszillierend hin- und her bewegt, so dass sich die Geschwindigkeit des Bearbeitungswerkzeugs ändert mit Umkehrpunkten zwischen einer Öffnungsbewegung und einer Schließbewegung und umgekehrt, wobei für die Umkehrpunkte die Geschwindigkeit des Bearbeitungswerkzeugs einen Nulldurchgang hat.

In der erfindungsgemäßen Querbearbeitungseinrichtung findet ein Oszillationsantrieb Einsatz, über den das Bearbeitungswerkzeug entsprechend oszillierend zwischen einer Öffnungsstellung und einer Schließstellung bewegt werden kann, wobei vorzugsweise die Öffnungsstellung mit einer Stellung korrespondiert, in welcher das Bearbeitungswerkzeug seitlich an einer Pflanze vorbeigeführt ist, während die Schließstellung mit einer Stellung des Bearbeitungswerkzeugs korreliert, die das Bearbeitungswerkzeug zwischen den Pflanzen einnimmt und in welcher das Bearbeitungswerkzeug den Bewuchs bearbeitet.

In der erfindungsgemäßen Querbearbeitungseinrichtung findet eine Erfassungseinrichtung Einsatz, die Informationen hinsichtlich der Pflanzen und/oder des Bewuchses zwischen den Pflanzen erfasst. Hierbei kann eine Erfassungseinrichtung gemäß dem eingangs genannten Stand der Technik oder auch gemäß anderen bekannten Erfassungseinrichtungen mit einer zugeordneten Auswertesoftware Einsatz finden.

Die erfindungsgemäße Querbearbeitungseinrichtung weist eine elektronische Steuereinrichtung auf. Die elektronische Steuereinrichtung steuert den Oszillationsantrieb an, worunter auch eine Regelung subsumiert werden soll. Hierbei erfolgt die Ansteuerung des Oszillationsantriebs mittels einer geeigneten Steuerlogik der Steuereinrichtung und eines auf dieser Grundlage erzeugten Steuersignals, welches dem Oszillationsantrieb zugeführt wird, so, dass
- ein Öffnungs- und/oder Schließhub des Bearbeitungswerkzeugs,
- eine Öffnungsstellung des Bearbeitungswerkzeugs,
- eine Schließstellung des Bearbeitungswerkzeugs und/oder
- eine Mittelstellung zwischen dem Bearbeitungswerkzeug und einem benachbarten Bearbeitungswerkzeug
verändert wird. Hierbei erfolgt die Veränderung in Abhängigkeit der von den mittels der Erfassungseinrichtung erfassten Informationen, wobei vorzugsweise die Veränderung so erfolgt, dass eine optimierte Bearbeitung des Bewuchses ohne eine unerwünschte Bearbeitung der Pflanzen der Pflanzreihe gewährleistet ist. Hierbei findet im Rahmen der Erfindung ein Oszillationsantrieb Einsatz, welcher die erforderlichen Veränderungen ermöglicht. Die genannten Veränderungen können hierbei alternativ oder kumulativ Einsatz finden, wobei beispielsweise eine Veränderung eines Öffnungs- und/oder Schließhubes mit einer Veränderung einer Öffnungsstellung und/oder Schließstellung verbunden sein kann.

Für die seitens der Steuereinrichtung berücksichtigten, von der Erfassungseinrichtung erfassten Informationen gibt es vielfältige Möglichkeiten. Ohne dass eine Einschränkung der Erfindung auf die folgenden Ausführungsbeispiele gewünscht ist, kann (in der Steuereinrichtung und/oder der Erfassungseinrichtung) Steuerlogik vorhanden sein, die aus den mittels der Erfassungseinrichtung erfassten Informationen
- eine Abmessung einer Pflanze der Pflanzreihe,
- einen lateralen Versatz einer Pflanze in der Pflanzreihe,
- eine Position einer Pflanze einer benachbarten Pflanzreihe und/oder
- eine Position eines Hindernisses
ermittelt. In Abhängigkeit hiervon wird dann mittels der Steuerlogik der Oszillationsantrieb zur Herbeiführung der entsprechenden Veränderung des Öffnungs- oder Schließhubs, der Öffnungsstellung, der Schließstellung und/oder der Mittelstellung angesteuert wird. Dies soll im Folgenden anhand einiger alternativ oder kumulativ eingesetzter Beispiele erläutert werden:
a) Die Abmessung einer Pflanze (insbesondere in der Höhe, in welcher sich das Bearbeitungswerkzeug bewegt) gibt vor, wie weit das Bearbeitungswerkzeug in Öffnungsrichtung quer zu der Pflanzreihe bewegt werden muss, damit das Bearbeitungswerkzeug nicht mechanisch die Pflanze bearbeitet. Vorzugsweise bewegt sich das Bearbeitungswerkzeug in einer parallel zum Ackerboden orientierten Ebene, welche auch entsprechend einem Umfangssegment einer zylindrischen Mantelfläche mit einem großen Durchmesser, welcher vorzugsweise der Länge eines Arms entspricht, an welchem das Bearbeitungswerkzeug gehalten ist, gekrümmt sein kann. Somit kann die Öffnungsstellung des Bearbeitungswerkzeugs und des Oszillationsantriebs von der Abmessung der Pflanze der Pflanzreihe abhängig sein, womit sich auch die Öffnungsstellung bei dem Passieren mehrerer Pflanzen der Pflanzreihe mit unterschiedlichen Abmessungen verändern kann.

- Wird anhand der mittels der Erfassungseinrichtung erfassten Informationen erkannt, dass ein lateraler Versatz mindestens einer Pflanze in der Pflanzreihe vorliegt, kann dies zu einer Veränderung sowohl der Öffnungsstellung als auch der Schließstellung des Bearbeitungswerkzeugs im Umgebungsbereich dieser Pflanze genutzt werden, wobei die Veränderung der Öffnungsstellung und der Schließstellung dem lateralen Versatz der Pflanze entsprechen kann.
- Wird eine Position einer Pflanze einer benachbarten Pflanzreihe erkannt, muss vermieden werden, dass das Bearbeitungswerkzeug lateral außen liegend mit dieser Pflanze der benachbarten Pflanzreihe in Wechselwirkung tritt. Somit kann eine erkannte Position einer Pflanze einer benachbarten Pflanzreihe zu einer Korrektur der Öffnungsstellung des Bearbeitungswerkzeugs derart erfolgen, dass die Öffnungsstellung so vermindert wird, dass keine Wechselwirkung mit der Pflanze in der benachbarten Pflanzreihe auftritt.
- Wird die Position eines Hindernisses, beispielsweise eines Steines erkannt, mit welchem das Bearbeitungswerkzeug nicht in Wechselwirkung treten soll, kann eine entsprechende Veränderung der Öffnungsstellung und/oder der Schließstellung des Bearbeitungswerkzeugs erfolgen, um eine Kollision mit dem Hindernis zu vermeiden.
- Wird ein lateraler Versatz einer Pflanze in der Pflanzreihe erkannt, kann dies auch zu einer Veränderung der Mittelstellung zwischen dem Bearbeitungswerkzeug und einem benachbarten Bearbeitungswerkzeug genutzt werden. Hierbei können die Schließstellungen des Bearbeitungswerkzeugs und des benachbarten Bearbeitungswerkzeugs beidseits einen gleichen Abstand von der Mittelstellung aufweisen, wobei die Summe dieser beiden Abstände der Abmessung der Pflanze der Pflanzreihe (mit einem gewissen vorbestimmten Übermaß) entsprecht, so dass die Pflanze durch die beiden Bearbeitungswerkzeuge ohne mechanischen Kontakt hindurchtreten kann. Andererseits folgt in diesem Fall die Mittelstellung der beiden benachbarten Bearbeitungswerkzeuge bei dem Passieren einer Pflanzreihe der Verbindungskurve der Pflanzen mit deren jeweiligen lateralen Versätzen.

Für die Ausgestaltung des mindestens einen in der Querbearbeitungseinrichtung eingesetzten Oszillationsantriebs gibt es im Rahmen der Erfindung unterschiedliche Möglichkeiten, von denen im Folgenden nur einige Möglichkeiten genannt werden:
Für eine erste Variante verfügt die Querbearbeitungseinrichtung über einen ersten Oszillationsantrieb und einem zweiten Oszillationsantrieb. Der erste Oszillationsantrieb ist mit einem ersten Bearbeitungswerkzeug verbunden, so dass dieser das erste Bearbeitungswerkzeug antreiben kann. Entsprechend ist der zweite Oszillationsantrieb mit einem zweiten Bearbeitungswerkzeug verbunden für dessen Antrieb. Die Steuereinrichtung steuert den ersten Oszillationsantrieb so an, dass die Öffnungsstellung, die Schließstellung, der Öffnungshub, der Schließhub des ersten Bearbeitungswerkzeugs oder die Mittelstellung zwischen dem ersten Bearbeitungswerkzeug und dem zweiten Bearbeitungswerkzeug in Abhängigkeit von mittels der Erfassungseinrichtung erfassten Informationen verändert wird. Alternativ oder kumulativ kann eine entsprechende Veränderung für das zweite Bearbeitungswerkzeug durch den zweiten Oszillationsantrieb erfolgen, was durch dieselbe, dann multifunktionale Steuereinrichtung oder zwei separate, dann u. U. miteinander kommunizierende Steuereinrichtungen erfolgen kann.

Im Rahmen der Erfindung kann ein beliebiger Oszillationsantrieb Einsatz finden, bei dem eine oszillierende (translatorische oder rotatorische) Bewegung eines Abtriebselements erzeugt wird. Handelt es sich bei dem Abtriebselement um eine Abtriebswelle, wird diese hin- und her verschwenkt zwischen einer Öffnungswinkelstellung und einer Schließwinkelstellung. Hierbei kann der Oszillationsantrieb einen Antriebsmotor aufweisen, der eine oszillierend verdrehte Antriebswelle aufweist oder auch eine kontinuierlich verdrehte Antriebswelle aufweist, deren Antriebsbewegung dann über eine geeignete getriebliche Verbindung in eine oszillierende Bewegung des Abtriebselements umgewandelt wird.

Für einen besonderen Vorschlag der Erfindung weist die Querbearbeitungseinrichtung mindestens einen Oszillationsantrieb auf, der einen Antriebsmotor aufweist, der vorzugsweise eine oszillierende Antriebsdrehbewegung erzeugt. Der Oszillationsantrieb verfügt über (mindestens) eine Abtriebswelle. Des Weiteren ist eine Antriebsverbindung vorhanden, die den Antriebsmotor mit der Abtriebswelle derart koppelt, dass die Abtriebswelle eine hin- und her gehende Bewegung zwischen einer Öffnungswinkelstellung und einer Schließwinkelstellung ausführt. In diesem Fall sind/ist die in dem Oszillationsantrieb eingesetzte Antriebsverbindung und/oder der Antriebsmotor besonders ausgestaltet: Der Antriebsmotor oder die Antriebsverbindung treibt ein Antriebselement mit einer translatorischen Hin- und Herbewegung an. Dies kann unmittelbar durch den Antriebsmotor erfolgen, so dass der Antriebsmotor selber eine translatorische Hin- und Herbewegung herbeiführt, die dann starr mit der Bewegung des Antriebselements gekoppelt ist. Möglich ist auch, dass eine etwaige translatorische Bewegung des Antriebsmotors über ein beliebig gestaltetes Getriebe umgewandelt wird in eine translatorische Bewegung des Antriebselements, wobei dann eine Über- oder Untersetzung erfolgen kann. Schließlich ist auch möglich, dass der Antriebsmotor eine rotatorische Antriebsbewegung erzeugt, die dann über ein beliebig gestaltetes Getriebe mit Unter- oder Übersetzung umgewandelt wird in eine translatorische Hin- und Herbewegung des Antriebselements. Das Antriebselement ist über einen Kniehebeltrieb mit der Abtriebswelle gekoppelt. Hierbei kann ein Kniehebel des Kniehebeltriebs drehfest mit der Abtriebswelle und/oder dem Antriebselement verbunden sein. Möglich ist des Weiteren, dass ein Kniehebel an einer drehfest mit der Abtriebswelle verbundenen Schwinge angelenkt ist. Möglich ist aber auch, dass eine weitere getriebliche Verbindung zwischen dem Kniehebeltrieb und der zugeordneten Abtriebswelle angeordnet ist.

Im Rahmen der Erfindung kann ein nicht lineares Übertragungsverhalten des Kniehebeltriebs genutzt werden. In Abhängigkeit von dem Kniewinkel führt derselbe translatorische Teilhub des Antriebselements zu einer kleineren oder größeren zugeordneten Drehbewegung der mindestens einen Abtriebswelle, womit die von dem Antriebsmotor auf das Antriebselement applizierte Antriebskraft mit unterschiedlich großer Über- oder Untersetzung an die mindestens eine Abtriebswelle übertragen wird.

Um lediglich ein die Erfindung nicht beschränkendes Beispiel für die Auslegung des Kniehebeltriebs zu nennen, kann sich dieser mit der Annäherung an die Schließstellung einer Strecklage des Kniehebeltriebs annähern, womit an der Abtriebswelle sehr hohe Momente herbeigeführt werden können. Dies bedeutet, dass mit dem Erreichen der Schließstellung, in welcher u. U. das Durchtrennen oder letzte Durchtrennen des Bewuchses erfolgt, große Bearbeitungskräfte herbeigeführt werden.

Gemäß einem weiteren Vorschlag der Erfindung ist der Oszillationsantrieb ein Doppeloszillationsantrieb. Der Doppeloszillationsantrieb weist eine erste Abtriebswelle und eine zweite Abtriebswelle auf. Hierbei treibt eine erste Abtriebswelle ein erstes Bearbeitungswerkzeug an, während die zweite Abtriebswelle ein zweites Bearbeitungswerkzeug antreibt. Somit kann mittels eines einzigen Antriebsmotors des Doppeloszillationsantriebs die Öffnungs- und Schließbewegung beider Bearbeitungswerkzeuge herbeigeführt werden.

Vorzugsweise treibt in dem Doppeloszillationsantrieb ein Antriebsmotor über eine Antriebsverbindung zwei Abtriebswellen so an, dass die Abtriebswellen entgegengesetzt zueinander orientierte Drehbewegungen ausführen und/oder die Drehbewegungen der beiden Abtriebswellen keine Phasenverschiebung aufweisen und/oder die Drehbewegungen der beiden Abtriebswellen denselben Drehwinkelverlauf aufweisen und/oder die Drehbewegungen der beiden Abtriebswellen in demselben Drehwinkelbereich oszillieren. Der Antriebsmotor wird dabei mit einem beliebigen oszillierenden Verlauf einer translatorischen Bewegung oder einer Drehbewegung betrieben.

Im Rahmen der Erfindung können/kann die in dem Doppeloszillationsantrieb eingesetzte Antriebsverbindung und/oder der Antriebsmotor besonders ausgestaltet sein: Der Antriebsmotor oder die Antriebsverbindung treibt ein Antriebselement mit einer translatorischen Hin- und Herbewegung an, wobei das zuvor hinsichtlich des Oszillationsantriebs zu der Abtriebsbewegung des Antriebsmotors und der Übertragung derselben Gesagte entsprechend gilt.

Im Bereich des Antriebselements kann eine Verzweigung des Kraftflusses zu den beiden Abtriebswellen erfolgen. Zu diesem Zweck kann das Antriebselement jeweils über einen Kniehebeltrieb mit einer zugeordneten Abtriebswelle gekoppelt sein. Hierbei kann jeweils ein Kniehebel des Kniehebeltriebs drehfest mit der zugeordneten Abtriebswelle und/oder dem Antriebselement verbunden sein. Möglich ist des Weiteren, dass jeweils ein Kniehebel an einer drehfest mit der zugeordneten Abtriebswelle verbundenen Schwinge angelenkt ist. Möglich ist aber auch, dass weitere getriebliche Verbindungen zwischen den Kniehebeltrieben und den zugeordneten Abtriebswellen angeordnet sind.

Die Kopplung des Antriebselements über die beiden Kniehebeltriebe mit dem zugeordneten Abtriebswellen gewährleistet auf einfacher Weise die gewünschte Verzweigung des Kraftflusses. Sind die Kniehebeltriebe auf gegenüberliegenden Seiten des Antriebselements angeordnet, teilt sich eine Kraft zwischen dem Antriebselement und dem Kniehebeltrieb je nach Kniewinkel des Kniehebeltriebs unter Umständen auf in eine Längskraft, welche in Richtung des translatorischen Freiheitsgrads des Antriebselements wirkt, sowie eine hierzu orientierte Querkraft. Sind die beiden Kniehebeltriebe auf gegenüberliegenden Seiten des Antriebselements angeordnet, können sich die beiden Querkräfte der beiden Kniehebeltriebe gegenseitig aufheben, womit die Beanspruchungen des Antriebselements, der Abstützung desselben und damit des Doppeloszillationsantriebs reduziert werden können.

Möglich ist, dass in der Querbearbeitungseinrichtung die Antriebsverbindung und der Antriebsmotor so ausgebildet sind, dass über eine Verstellung des Arbeitsbereichs der beiden Bearbeitungswerkzeuge und damit die Wahl der Öffnungsstellungen und Schließstellungen derselben auch eine Mittelstellung zwischen den beiden Bearbeitungswerkzeugen, also insbesondere die Mitte zwischen den beiden Schließstellungen der Bearbeitungswerkzeuge, verändert werden kann, um insbesondere einen lateralen Versatz einer Pflanze der Pflanzreihe berücksichtigen zu können. Für einen weiteren Vorschlag der Erfindung verfügt die Querbearbeitungseinrichtung zusätzlich zu dem Doppeloszillationsantrieb mit dem Antriebsmotor über einen weiteren Antrieb, mittels dessen eine Veränderung einer Mittelstellung des ersten Bearbeitungswerkzeugs und des zweiten Bearbeitungswerkzeugs herbeiführbar ist. Auch in diesem Fall erfolgt die Veränderung der Mittelstellung und damit die Ansteuerung des weiteren Antriebs durch die oder eine Steuereinrichtung auf Grundlage der durch die Erfassungseinrichtung erfassten Informationen. Möglich ist beispielsweise, dass die Querbearbeitungseinrichtung den Doppeloszillationsantrieb aufweist, bei dem lediglich gemeinsam eine Veränderung der Öffnungs- und Schließstellungen der beiden Abtriebswellen und damit der Bearbeitungswerkzeuge in demselben Ausmaß erfolgen kann, womit die Mittelstellung des Doppeloszillationsantriebs relativ zu dem Gehäuse desselben nicht verändert werden kann. Mittels des weiteren Antriebs kann aber dann der Doppeloszillationsantrieb bzw. ein Gehäuse desselben in Querrichtung verschoben werden, womit dann durch den weiteren Antrieb eine unmittelbare Veränderung nur der Mittelstellung herbeiführbar ist.

Grundsätzlich kann im Rahmen der Erfindung ein Antriebsmotor in beliebiger technischer Ausgestaltung eingesetzt werden, mit dem vorzugsweise eine translatorische oder rotatorische Antriebsbewegung erzeugt wird. Für einen Vorschlag der Erfindung weist der Doppeloszillationsantrieb einen elektrischen Antriebsmotor auf, bei welchem es sich beispielsweise um einen Schrittmotor herkömmlicher Bauart handeln kann, der eine rotatorische Bewegung oder auch eine translatorische Bewegung herbeiführt.

Insbesondere für den Fall, dass ein Antriebsmotor mit einer rotatorischen Antriebsbewegung genutzt wird, kann gemäß einem weiteren Vorschlag der Erfindung in dem (Doppel-) Oszillationsantrieb (oder in der Antriebsverbindung) ein Spindeltrieb eingesetzt sein. Möglich ist hierbei, dass eine Spindel von dem Antriebsmotor angetrieben wird und axial nicht verschieblich, aber verdrehbar gelagert ist. In diesem Fall kann eine Spindelmutter axial verschieblich, aber drehfest gelagert sein. Der rotatorische Antrieb der Spindel durch den Antriebsmotor hat dann eine translatorische Verschiebung der Spindelmutter zur Folge, die bspw. (unmittelbar oder mittelbar) zum Antrieb des Antriebselements und damit der Kniehebeltriebe genutzt werden kann. Ein derartiger Spindeltrieb ermöglicht auf einfache, aber auch zuverlässige Weise und unter Umständen auch für hohe Antriebsmomente die Übertragung der verallgemeinerten Antriebskräfte und die erforderliche Umwandlung. Unter Umständen kann auch eine Selbsthemmung des Spindeltriebs genutzt werden, um eine Sicherung einer einmal herbeigeführten Position des Antriebselements bei einer Reduzierung oder einem Entfall der elektrischen Beaufschlagung eines elektrischen Antriebsmotors genutzt werden.

Problematisch bei einem (Doppel-) Oszillationsantrieb der hier vorliegenden Art kann unter Umständen sein, dass für einen beispielsweise als elektrischer Schrittmotor ausgebildeten Antriebsmotor, insbesondere nach einem Abschalten der elektrischen Leistungsversorgung, eine Referenzierung des Antriebsmotors erforderlich ist, damit eine Steuereinrichtung für den Antriebsmotor bei einer Wiederaufnahme der elektrischen Leistungsversorgung (beispielsweise einer Inbetriebnahme des (Doppel-)Oszillationsantriebs) eine Information darüber hat, welche Betriebsstellung der Antriebsmotor aktuell einnimmt. Entsprechend kann unter Umständen auch eine Referenzierung eines Sensors erforderlich sein, welcher die Bewegung eines der in dem (Doppel-) Oszillationsantrieb über dem Arbeitshub bewegten Bauelemente (insbesondere hinsichtlich des Wegs, der Geschwindigkeit oder der Beschleunigung in einem Wegbereich oder Winkelbereich) erfasst. Bspw. für diese Fälle schlägt die Erfindung vor, dass in dem (Doppel-) Oszillationsantrieb ein Anschlag vorhanden ist. Der Anschlag gibt einer Anschlagstellung des (Doppel-) Oszillationsantriebs, also eine definierte Position des (Doppel-) Oszillationsantriebs im Bereich des Hubs desselben, vor. In dem (Doppel-) Oszillationsantrieb wird zur Ermöglichung einer Referenzierung des Antriebsmotors und/oder des Sensors eine spezifische, vorbekannte Lage angesteuert, indem die Steuereinrichtung den (Doppel-) Oszillationsantrieb in die Anschlagstellung steuert. Wird das Erreichen der Anschlagstellung erkannt (was beispielsweise durch einen Kontaktsensor des Anschlags erfolgen kann oder einen Leistungsanstieg der Bestromung des elektrischen Antriebsmotors in Folge der Anpressung an den Anschlag), erkennt die Steuereinheit, dass die Referenzlage herbeigeführt ist, sodass eine Zuordnung der zuvor abgespeicherten Referenzlage entsprechend der Position des Anschlags erfolgen kann, wodurch die Referenzierung des Antriebsmotors und/oder eines Sensors möglich ist. Wird dann ausgehend von dieser Referenzierung der (Doppel-) Oszillationsantrieb betätigt, kann ausgehend von der Anschlag- oder Referenzstellung dann das Signal des Sensors ermittelt werden oder auch bspw. die Zählung der Schritte des Schrittmotors erfolgen.

Wird für die Verwendung eines Anschlags zur Referenzierung ein Bauelement in der Anschlagstellung an den Anschlag angepresst, ist u. U. nach dem Durchführen der Referenzierung und der Wiederaufnahme des Betriebs des (Doppel-) Oszillationsantriebs ein "Losbrechen" des Bauelements von dem Anschlag und eine Überwindung einer Haftreibkraft erforderlich, was zu einer erhöhten Leistungsaufnahme des Antriebsmotors und instabilen Bewegungsvorgängen führen kann und im schlimmsten Fall zu einem "Festfressen" führen kann. Erfindungsgemäß wird vorgeschlagen, dass für eine Ausführungsform die Anschlagstellung durch eine Abstützung einer Stirnseite einer Spindel des Spindeltriebs über eine Kugel mit einer Kontaktfläche einer Spindelmutter bereitgestellt ist. Hier liegt die Stirnseite der Spindel an der Kugel und/oder die Kugel an der Kontaktfläche der Spindelmutter mit einer punktförmigen oder sehr kleinen Kontaktfläche an, wobei durch Einsatz der Kugel die Losbrechkräfte und damit die erforderliche Leistungsaufnahme des Antriebsmotors reduziert werden kann.

Die Erfindung schlägt auch vor, dass in dem Doppeloszillationsantrieb ein Sensor vorhanden ist, welcher die Bewegung (eines beliebigen, über den Hub des (Doppel-) Oszillationsantriebs bewegten Bauelements) erfasst.

Vorzugsweise erfasst dabei der Sensor die translatorische Bewegung des Antriebselements.

Für den Sensor kann ein Sensor mit einem beliebigen Messprinzip Einsatz finden. Insbesondere für den Fall, dass der Sensor die translatorische Bewegung des Antriebselements erfasst, kann der Sensor als Hall-Sensor ausgebildet sein. Möglich ist hierbei beispielsweise, dass das Antriebselement einen Magneten des Hall-Sensors trägt, sodass dieser Magnet mit dem Antriebselement translatorisch bewegt wird. An der Außenseite eines Gehäuses des (Doppel-) Oszillationsantriebs, welches dann beispielsweise aus Aluminium oder Edelstahl hergestellt ist und welches von dem magnetischen Feld des Magneten des Hall-Sensors durchdrungen wird, kann dann eine Empfangs- und Auswerteeinrichtung des Hall-Sensors angeordnet, angeflanscht oder angebracht sein.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Ansicht schräg von oben einen als Doppeloszillationsantrieb ausgebildeten Oszillationsantrieb, der für den Einsatz in einer Querbearbeitungseinrichtung geeignet ist.
- **Fig. 2**: zeigt in einem Horizontalschnitt den Doppeloszillationsantrieb gemäß Fig. 1, wobei sich der Doppeloszillationsantrieb in einer Schließstellung befindet.
- **Fig. 3**: zeigt in einem Horizontalschnitt den Doppeloszillationsantrieb gemäß Fig. 1 und 2, wobei sich der Doppeloszillationsantrieb in einer Öffnungsstellung befindet.
- **Fig. 4**: zeigt in einem Teil-Vertikalschnitt den Doppeloszillationsantrieb gemäß Fig. 1 bis 3.
- **Fig. 5**: zeigt in einer räumlichen Ansicht schräg von oben eine Querbearbeitungseinrichtung mit einem Doppeloszillationsantrieb gemäß Fig. 1 bis 4 in einer Schließstellung.
- **Fig. 6**: zeigt in einer räumlichen Ansicht schräg von oben den Einsatz eine Querbearbeitungseinrichtung bei einer Bearbeitung im Bereich einer Pflanzreihe, wobei die Querbearbeitungseinrichtung einen Doppeloszillationsantrieb, eine Erfassungseinrichtung und eine Steuereinrichtung aufweist und die Querbearbeitungseinrichtung in einer Öffnungsstelle eine Pflanze der Pflanzreihe passiert.
- **Fig. 7**: zeigt in einer räumlichen Ansicht entsprechend Fig. 6 die Querbearbeitungseinrichtung, wobei hier die Querbearbeitungseinrichtung in einer Schließstellung Bewuchs zwischen Pflanzen der Pflanzreihe bearbeitet.
- **Fig. 8**: zeigt schematisch eine ideale Pflanzreihe mit der Mittelstellung von zwei Bearbeitungswerkzeugen und den Öffnungsstellungen und Schließstellungen derselben.
- **Fig. 9**: ist eine Fig. 8 entsprechende Darstellung, wobei hier eine nicht ideale Pflanzreihe mit variierenden Abmessungen der Pflanzen und einem lateralen Versatz einer Pflanze vorliegt.
- **Fig. 10**: zeigt in einer räumlichen Ansicht schräg von oben eine Querbearbeitungseinrichtung mit einem Doppeloszillationsantrieb und einem weiteren Antrieb zur Verstellung der Mittelstellung der Bearbeitungswerkzeuge.
- **Fig. 11**: zeigt in einer räumlichen Ansicht schräg von oben eine Querbearbeitungseinrichtung mit zwei individuell angesteuerten Oszillationsantrieben, die jeweils ein Bearbeitungswerkzeug antreiben.

### FIGURENBESCHREIBUNG

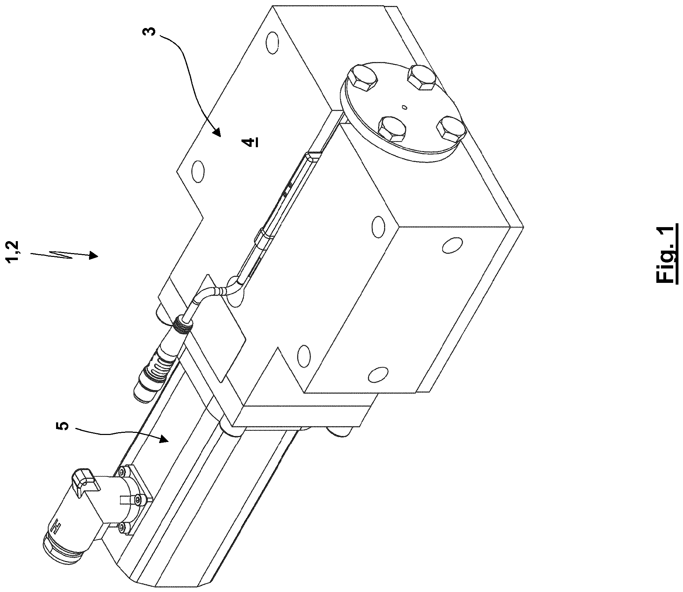

**Fig. 1 bis 4** zeigen einen Oszillationsantrieb 1, der hier ein Doppeloszillationsantrieb 2 ist.

Der Doppeloszillationsantrieb 2 verfügt über ein Getriebemodul 3 mit einem Gehäuse 4, an welches an eine hier vertikale Stirnseite ein Antriebsmotor 4 angeflanscht ist. Der Antriebsmotor 5 verfügt über eine Antriebswelle 6, die sich in das Innere des Gehäuses 4 erstreckt. Bei der in den Figuren gewählten Orientierung erstrecken sich parallel zueinander und vertikal nach unten aus dem Gehäuse 4 des Getriebemoduls 3 zwei Abtriebswellen 7, 8 heraus.

In dem Getriebemodul 3 erfolgt eine Kopplung der Antriebswelle 6 des Antriebsmotors 5 mit den Abtriebswellen 7, 8 über eine Antriebsverbindung 9. In der Antriebsverbindung 9 sind für das dargestellte Ausführungsbeispiel ein Spindeltrieb 10 und zwei Kniehebeltriebe 11, 12 im Kraftfluss hintereinander geschaltet, wobei hierbei die beiden Kniehebeltriebe 11, 12 im Kraftfluss parallel zueinander angeordnet sind.

Der Spindeltrieb 10 weist eine Spindel 13 auf. Die Spindel 13 ist über eine drehfeste Verbindung mit der Antriebswelle 6 des Antriebsmotors 5 verbunden. Für das dargestellte Ausführungsbeispiel verfügt zu diesem Zweck die Antriebswelle 6 über parallele, auf gegenüber liegenden Seiten angeordnete Abflachungen 14, 15, die formschlüssig in Umfangsrichtung möglichst spielfrei aufgenommen sind in einer stirnseitigen Ausnehmung 16 der Spindel 13, die korrespondierende Abflachungen aufweist, sodass eine möglichst spielfreie Übertragung der Drehbewegung und eines Antriebsmoments von der Antriebswelle 6 auf die Spindel 13 erfolgt. Mittels eines axialen, in beide axiale Richtungen wirkenden Lagers 17 (welches hier von zwei unmittelbar nebeneinander angeordneten Rillenkugellagern gebildet ist) ist die Spindel 13 drehbar, aber axial nicht verschiebbar gegenüber dem Gehäuse 4 des Getriebemoduls 3 gelagert. Die Spindel 13 verfügt in dem Endbereich, der auf der dem Antriebsmotor 5 abgewandten Seite von dem Lager 17 angeordnet ist, im Bereich der Mantelfläche über ein Außengewinde 18, welches mit einem Innengewinde 19 einer Spindelmutter 20 kämmt. Die Spindelmutter 20 ist, beispielsweise durch einen formschlüssigen Eingriff von Rippen der Spindelmutter 20 in entsprechend geformte Führungsnuten des Gehäuses 4, nicht gegenüber dem Gehäuse 4 verdrehbar, aber axial translatorisch verschiebbar. Die Spindelmutter 20 ist hier einstückiger Bestandteil eines Antriebselements 21.

Das Antriebselement 21 ist translatorisch in dem Gehäuse 4 des Getriebemoduls 3 geführt, was hier mittels Gleitlagern 22, 23 erfolgt. Im Bereich der Gleitlager 22, 23 sind auch Dichtungen 24, 25, insbesondere O-Ringe, angeordnet. Der translatorische Freiheitsgrad des Antriebselements 21 ist hierbei vertikal zu der Längs- und Rotationsachse der Abtriebswellen 7, 8 orientiert.

In das Innere des Gehäuses 4 des Getriebemoduls 3 hineinragende Endbereiche der Abtriebswellen 7, 8 sind jeweils drehfest mit einer Schwinge 26, 27 verbunden. Starre Fortsätze des Antriebselements 21, die auf gegenüberliegenden Seiten des Antriebselements 21 angeordnet sind und sich in den Figuren in der Horizontalebene und quer zum translatorischen Freiheitsgrad des Antriebselements 21 sowie auch vertikal zu der Längs- und Rotationsachse der Abtriebswellen 7, 8 erstrecken, bilden jeweils einen Kniehebel 28, 29 der Kniehebeltriebe 11, 12. Diese Kniehebel 28, 29 werden nur entsprechend dem translatorischen Freiheitsgrad des Antriebselements 21 bewegt, während sich ein Winkel derselben über den Hub des Antriebselements 21 nicht ändert. In einem Kniegelenk 30, 31 sind die Kniehebel 28, 29 jeweils mit einem zugeordneten Kniehebel 32, 33 verschwenkbar verbunden. Hierbei erfolgt die Verschwenkung der Kniehebel 32, 33 in Abhängigkeit von der Bewegung des Antriebselements 21 in der in den Figuren dargestellten Orientierung des Doppeloszillationsantriebs 2 in einer Horizontalebene, bei der es sich um eine Ebene handelt, die vertikal zu den Längs- und Rotationsachsen der Abtriebswellen 7, 8 orientiert ist. Die den Kniegelenken 30, 31 abgewandten Endbereiche der Kniehebel 32, 33 sind mittels Schwenklagern 34, 35 jeweils an einer zugeordneten Schwinge 26, 27 angelenkt.

Für das dargestellte Ausführungsbeispiel sind die Kniegelenke 30, 31 sowie die Schwenklager 34, 35 mit in den entsprechenden Lageraugen der zugeordneten Bauelemente aufgenommenen Schwenkbolzen gebildet.

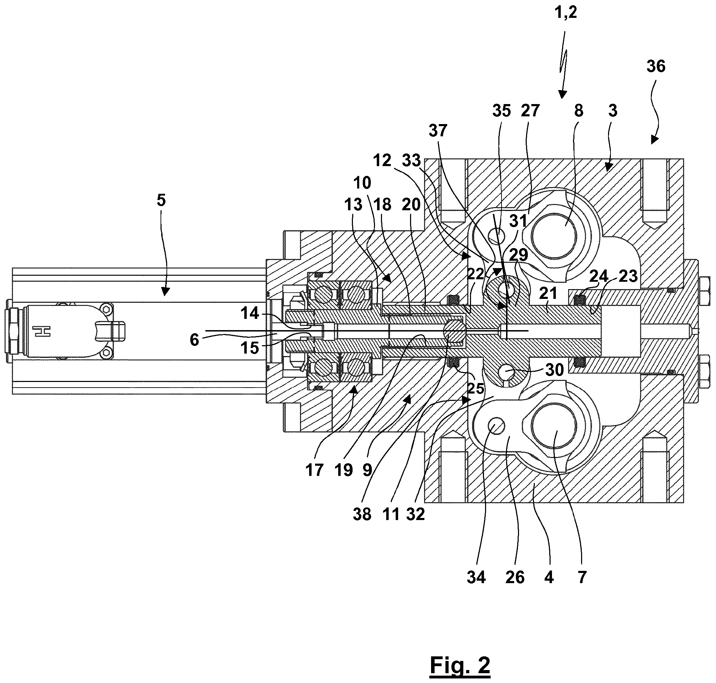

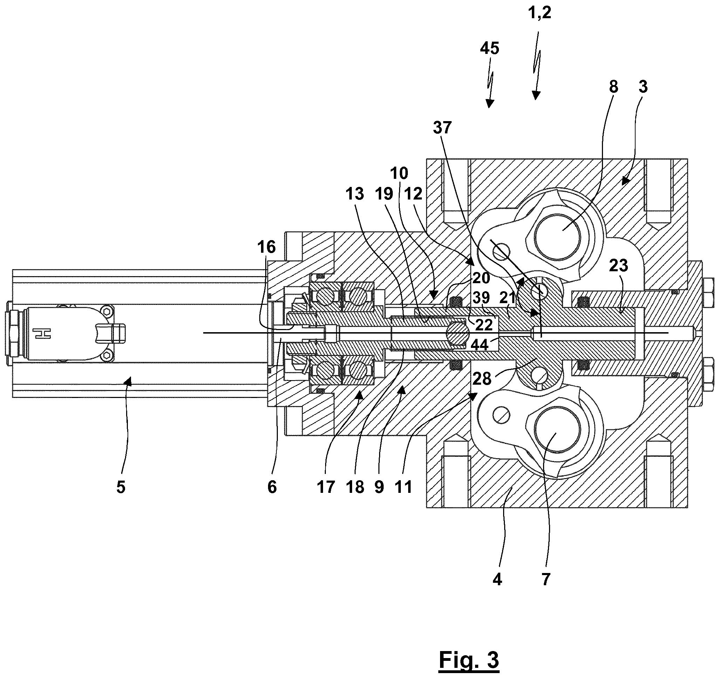

Fig. 2 zeigt den Doppeloszillationsantrieb 2 in einer Schließstellung 36. In dieser Schließstellung 36 liegt ein Kniewinkel 37 der Längsachsen der Paare der Kniehebel 29, 33 bzw. 28, 32 der Kniehebeltriebe 11, 12 im Bereich von 160° bis 180° (insbesondere 165° bis 175°), sodass die Kniehebeltriebe 11, 12 eine Betriebsstellung einnehmen, die geringfügig benachbart der Strecklage ist, welche einem Kniewinkel 37 von 180° entspricht. Von der Schließstellung 36 gemäß Fig. 2 erfolgt mit einer Öffnungsbewegung, die durch den Antrieb des Antriebmotors 5 verursacht wird, die Bewegung des Antriebselements 21 in Richtung des translatorischen Freiheitsgrades in Fig. 2 nach rechts, bis eine Öffnungsstellung 45 gemäß Fig. 3 eingenommen ist. Während dieser Bewegung verringert sich der Kniewinkel 37, wobei dieser in der Öffnungsstellung 45 gemäß Fig. 3 beispielsweise im Bereich von 30° bis 70°, insbesondere im Bereich von 40° bis 50°, liegen kann, um lediglich ein die Erfindung nicht beschränkendes Beispiel zu nennen. Mit der Veränderung des Kniewinkels 37 erfolgt eine Verschwenkung der zugeordneten Schwingen 26, 27, womit eine entsprechende Verschwenkung der Abtriebswellen 7, 8 erfolgt. Hierbei ist die Verschwenkung der Schwingen 26, 27 sowie der Abtriebswellen 7, 8 entgegengesetzt zueinander orientiert.

Als eine optionale Besonderheit trägt die Spindel 13 des Spindeltriebs 10 in dem in das Antriebselement 21 hineinragenden Endbereich eine Kugel 38, die aus der Spindel 13 mit einer teilkugelförmigen Teilmantelfläche heraussteht. In der Schließstellung 36 gemäß Fig. 2 liegt die Kugel 38 an dem Boden der Ausnehmung 39 bzw. Innengewindebohrung des Antriebselements 21 an. Dies kann durch einen Punktkontakt, einen Kontakt mit sehr kleiner Fläche oder, für den Fall, dass, wie in Fig. 3 zu erkennen ist, das Antriebselement 21 eine zentrische Bohrung aufweist, im Bereich einer schmalen Ringfläche erfolgen. Die durch den Kontakt der Kugel 28 mit dem Boden der Ausnehmung 39 wirkende kleine Kontaktfläche hat zur Folge, dass keine großen Reibmomente in der Schließstellung 36 zwischen der Spindel 13 und dem Antriebselement 21 auftreten, so dass für die Bewegung aus der Schließstellung 36 gemäß Fig. 2 in die Öffnungsstellung 45 gemäß Fig. 3 keine großen Losbrechkräfte von dem Antriebsmotor 5 aufzubringen sind. Der Boden der Ausnehmung 39 bildet für die Kugel 38 einen Anschlag 44, der eine Anschlagstellung des Doppeloszillationsantriebs 2 vorgibt, in der eine Referenzierung des Doppeloszillationsantriebs 2 und/oder des Sensors 40 erfolgen kann.

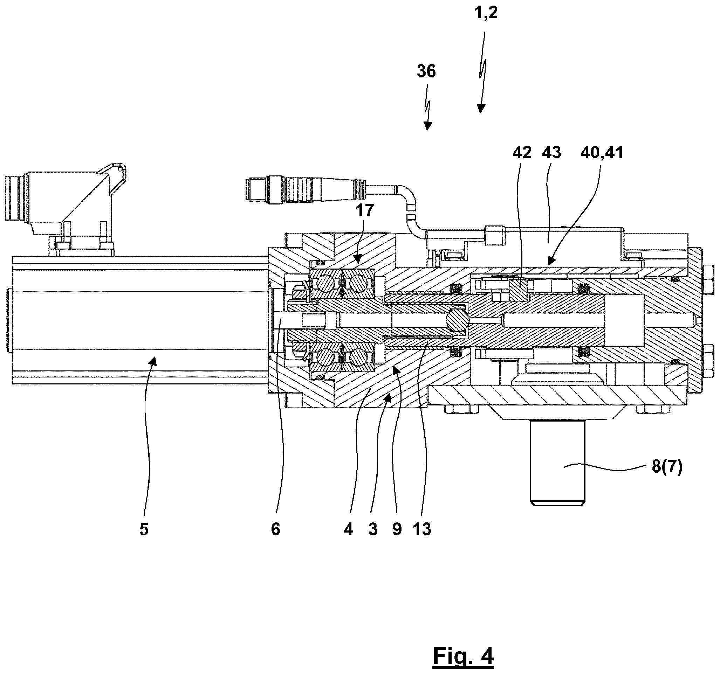

Als weitere optionale Besonderheit verfügt der Doppeloszillationsantrieb 2 über einen Sensor 40, der hier beispielhaft als Hall-Sensor 41 ausgebildet ist (s. Fig. 4). Der Sensor 40 erfasst eine Bewegung eines über den Hub des Doppeloszillationsantriebs 2 bewegten Bauelements, bei welchem es sich für das dargestellte Ausführungsbeispiel um das Antriebselement 21 handelt. Zu diesem Zweck trägt das Antriebselement 21 einen Permanentmagneten 42. Das Magnetfeld des Permanentmagneten 42 durchdringt radial außenliegend hiervon das Gehäuse 4, welches zu diesem Zweck aus Aluminium oder Edelstahl hergestellt sein kann. Eine von außen an das Gehäuse 4 angesetztes Empfangs- und/oder Verarbeitungsmodul 43 empfängt das Magnetfeld und wertet das sich ändernde Magnetfeld mit der Bewegung des Antriebselements 21 zwecks Erfassung der Hubbewegung des Antriebselements 21 aus.

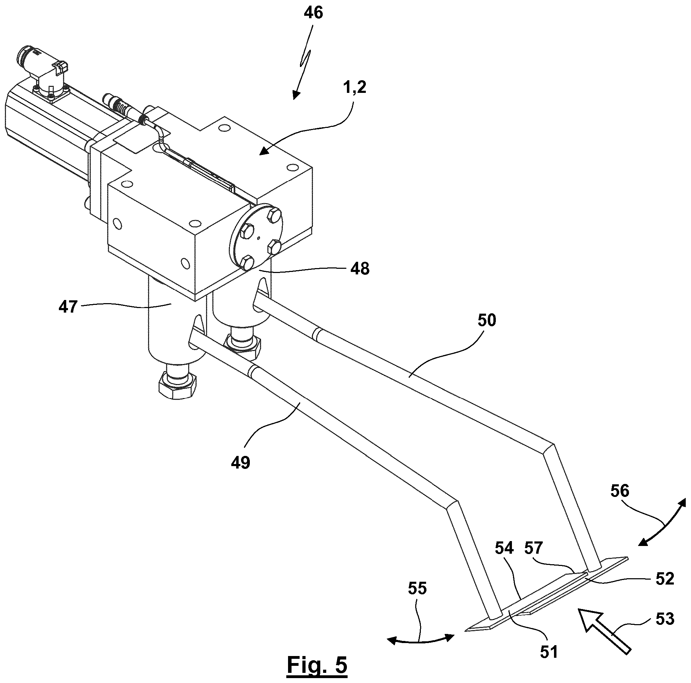

**Fig. 5** zeigt den Einsatz des Doppeloszillationsantriebs 2 gemäß Fig. 1 bis 4 in einer Querbearbeitungseinrichtung 46. Drehfest mit den Abtriebswellen 7, 8 verbunden sind Haltekörper47, 48. Die Haltekörper 47, 48 halten lösbar Schwenkarme 49, 50, an denen wiederum in den den Haltekörpern 47, 48 abgewandten Endbereichen Bearbeitungswerkzeuge 51, 52 gehalten sind.

Die Bearbeitungswerkzeuge 51, 52 sind beispielsweise als Hackmesser oder Gänsefußschare ausgebildet.

Die Bearbeitungswerkzeug 51, 52 werden hinsichtlich der Pflanzen und des Bewuchses auf zwei unterschiedliche Weisen relativ bewegt:
a) Die Querbearbeitungseinrichtung 46 wird in eine Längsrichtung 53, welche mit der Ausrichtung einer Pflanzreihe 58 übereinstimmt, mittels eines Fahrzeugs, an dem die Querbearbeitungseinrichtung 46 gehalten ist, bewegt. Mit dieser Bewegung können Schneiden oder Bearbeitungsflächen 54 der Bearbeitungswerkzeuge 51, 52, deren (Flächen-) Normale parallel zur Längsrichtung 53 orientiert ist, mit dem Bewuchs in Wechselwirkung treten. Die Kraft, mit welcher die Bearbeitungsflächen 54 der Bearbeitungswerkzeuge 51, 52 mit dem Bewuchs in Wechselwirkung treten, wird dabei von dem Antrieb des Fahrzeugs aufgebracht.
b) Darüber hinaus führen die Bearbeitungswerkzeuge 51, 52 infolge des Antriebs durch den Doppeloszillationsantrieb 2 gegenläufige Öffnungs- und Schließbewegungen 55, 56 aus. Während der Schließbewegungen tritt hierbei eine Schneide oder Bearbeitungsfläche 57, deren (Flächen-) Normale in Querrichtung orientiert ist, in Wechselwirkung mit dem Bewuchs. Die Kraft, mit welcher die Bearbeitungsflächen 57 der Bearbeitungswerkzeuge 51, 52 mit dem Bewuchs in Wechselwirkung tritt, wird hierbei von dem Doppeloszillationsantrieb 2 aufgebracht.

Im Betrieb der Querbearbeitungseinrichtung 46 erfolgt u. U. eine Überlagerung der zuvor erläuterten Bewegungen sowie der Wechselwirkungen mit dem Bewuchs.

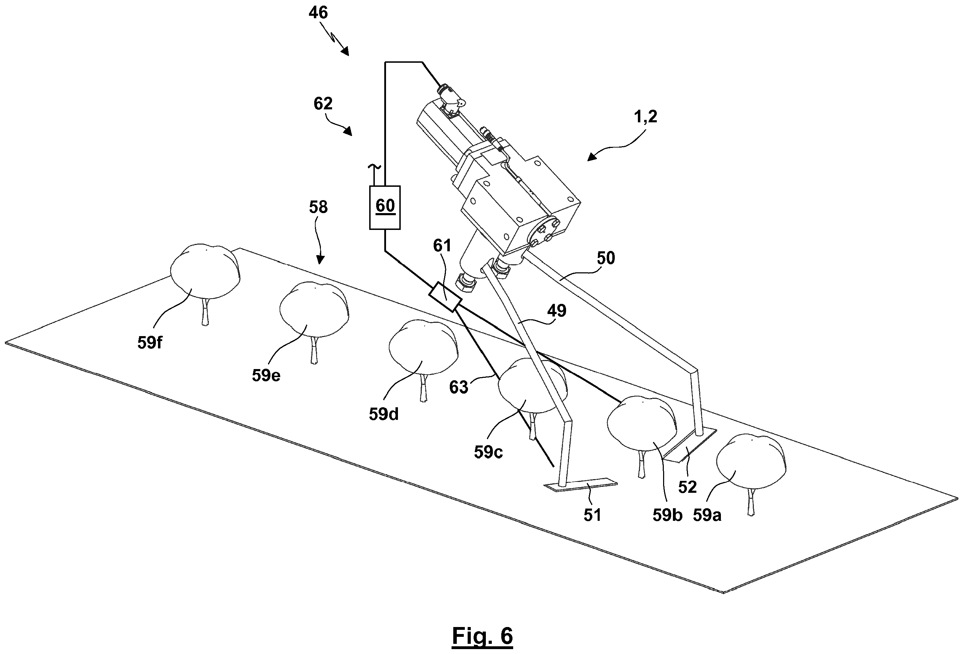

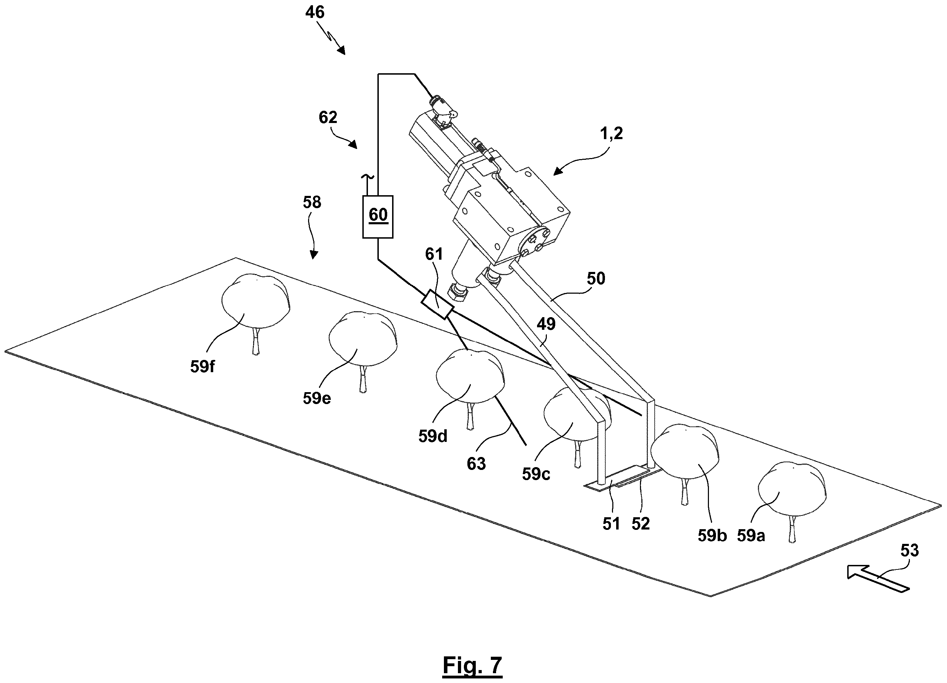

**Fig. 6** **und** **7** zeigen eine Pflanzreihe 58, die in Längsrichtung 53 orientiert ist. Die Pflanze 58 verfügt über Pflanzen 59a, 59b, ..., die im Idealfall gleiche Abstände voneinander aufweisen und deren Mittel oder Stängel auf einer in Längsrichtung 53 orientierten Geraden angeordnet sind.

Hier weist die Querbearbeitungseinrichtung 46 den Doppeloszillationsantrieb 2, eine Steuereinrichtung 60 und eine Kamera 61 auf. Mittels der Kamera 61 wird in einem Beobachtungsfeld 63 ein Bild eines Teilausschnitts der Pflanzreihe 58 im Umgebungsbereich der Pflanzen 59 und des Bewuchses aufgenommen. Die Steuereinrichtung 60 und die Kamera 61 bilden eine Erfassungseinrichtung 62, mittels welcher bspw.
- eine Unterscheidung von Pflanzen 59 und eines Bewuchses zwischen den Pflanzen 59,
- eine Ermittlung einer Abmessung einer Pflanze,
- eine Ermittlung eines lateralen Versatzes einer Pflanze,
- eine Ermittlung einer Position einer Pflanze einer benachbarten Pflanzreihe und/oder
- eine Ermittlung einer Position eines Hindernisses
möglich ist. Hierzu verfügt die Steuereinrichtung 60 über geeignete Bildanalyse- und Auswertelogik. Für das dargestellte Ausführungsbeispiel sind die Kamera 61 und die Steuereinrichtung 60 sowie der Doppeloszillationsantrieb 2 separat voneinander ausgebildet und beabstandet voneinander angeordnet sowie über geeignete (uni- oder bidirektionale) Leitungen, drahtlos und/oder ein Bussystem miteinander verbunden. Die Steuereinrichtung 60 erzeugt ein geeignetes Steuersignal für den Antriebsmotor 5 des Doppeloszillationsantriebs 2, insbesondere den Antriebsstrom für einen elektrischen Antriebsmotor 5. Abweichend hierzu ist aber auch möglich, dass der Doppeloszillationsantrieb 2 mit der Steuereinrichtung 60 (und in einigen Fällen auch mit der Kamera 61) eine Baueinheit bildet.

Fig. 6 zeigt die Querbearbeitungseinrichtung 46 in der Öffnungsstellung der Bearbeitungswerkzeuge 51, 52, in welcher die Bearbeitungswerkzeuge 51, 52 eine Pflanze 59b passieren. Fig. 7 zeigt die Querbearbeitungseinrichtung 46 in einer Schließstellung zwischen benachbarten Pflanzen 59b, 59c mit einer Bearbeitung des Bewuchses durch die Bearbeitungswerkzeuge 51, 52. Möglich ist, dass, wie in Fig. 5 und 7 dargestellt, in der Schließstellung die Bearbeitungswerkzeuge 51, 52 (mit einem möglichst kleinen Abstand) überlappen. Durchaus möglich ist aber auch, dass die einander zugewandten Bearbeitungsflächen 57 der Bearbeitungswerkzeuge 51, 52 in der Schließstellung einen geringen Abstand voneinander aufweisen oder aneinander zur Anlage kommen.

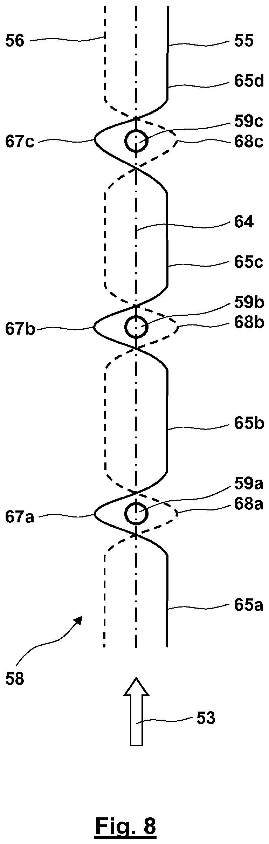

**Fig. 8** zeigt eine idealisierte Pflanzreihe 58 mit Pflanzen 59a, 59b, 59c. Mit durchgezogener Linie ist hier die Öffnungs- und Schließbewegung 55 des einen Bearbeitungswerkzeugs 51 dargestellt, während mit der gestrichelten Linie die Öffnungs- und Schließbewegung 56 des anderen Bearbeitungswerkzeugs 52 dargestellt ist. Hingegen ist mit der strichpunktierten Linie die Mittelstellung 64 der beiden Bearbeitungswerkzeuge 51, 52 dargestellt. Zu erkennen ist hier, dass zwischen den Pflanzen 59a, 59b, 59c die Bearbeitungswerkzeuge 51, 52 jeweils Schließstellungen 65a, 65b, 65c, 65d bzw. 66a, 66b, 66c, 66d einnehmen. Hingegen nehmen die Bearbeitungswerkzeuge 51, 52 bei dem Passieren der Pflanzen 59a, 59b, 59c Öffnungsstellungen 67a, 67b, 67c bzw. 68a, 68b, 68c ein. In den Schließstellungen 65, 66 verbleiben die Bearbeitungswerkzeuge 61, 62 für eine gewisse Zeit, so dass hier keine Betätigung des Doppeloszillationsantriebs 2 erfolgt. Hingegen erfolgt eine Änderung von den Schließstellungen 65, 66 in die Öffnungsstellungen 67, 68 durch die mittels des Doppeloszillationsantriebs 2 herbeigeführten Öffnungs- und Schließbewegungen 55, 56. Die Mittelstellung 64 ist durch die Position der Querbearbeitungseinrichtung 46 an dem Fahrzeug und die Position des Fahrzeugs relativ zu der Pflanzreihe 58 vorgegeben. Für die idealisierte Pflanzreihe 58 ändern sich die Öffnungs- und Schließstellungen 65, 66, 67, 68 nicht.

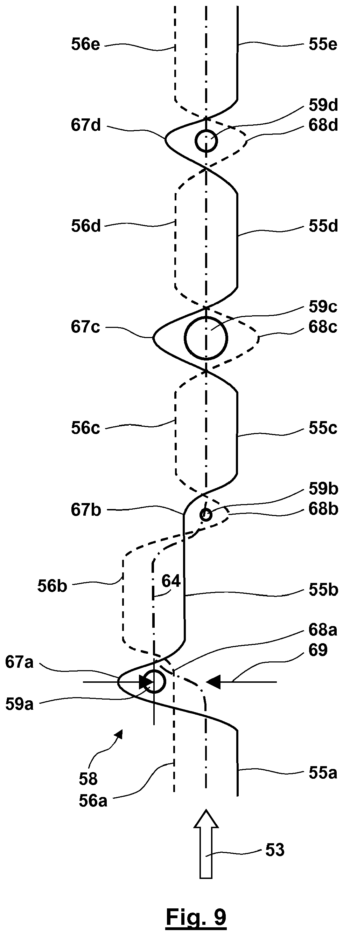

**Fig. 9** zeigt die Verhältnisse beispielhaft für eine nicht idealisierte Pflanzreihe 58. Hier verfügen die Pflanzen 59a, 59b, 59c, 59d über unterschiedliche Abmessungen insbesondere in Querrichtung. Des Weiteren ist eine Pflanze 59a mit einem lateralen Versatz 69 in der Pflanzreihe 58 angeordnet.

Den Unregelmäßigkeiten der Pflanzreihe 58 trägt die Querbearbeitungseinrichtung 46 durch die entsprechende Ansteuerung des Doppeloszillationsantriebs 2 wie folgt Rechnung:
- Um zu gewährleisten, dass die Bearbeitungswerkzeuge 51, 52 die Pflanzen 59 mit den unterschiedlichen Abmessungen passieren, erfolgt eine Anpassung der Öffnungsstellungen 67, 68 entsprechend den Abmessungen der Pflanzen 59.
- Um den lateralen Versatz 69 der Pflanze 59a zu berücksichtigen, ist eine Anpassung sowohl der Schließstellungen 55b, 56b vor oder hinter der Pflanze 59a mit dem lateralen Versatz 69 als auch der Öffnungsstellungen 67a, 68a im Bereich der Pflanze 59a mit dem lateralen Versatz 69 erforderlich, was zur Folge hat, dass auch eine Veränderung der Mittelstellung 64 erforderlich ist.

Da bei dem Einsatz des Doppeloszillationsantriebs 2 in Ausgestaltung gemäß den Fig. 1 bis 4 immer die Öffnungs- und Schließstellungen der beiden Abtriebswellen 7, 8 gleich sind, kann bei fester Anordnung des Doppeloszillationsantriebs 2 an einem Fahrzeug die Mittelstellung 64 ausschließlich durch eine laterale Lenkbewegung des Fahrzeugs verändert werden.

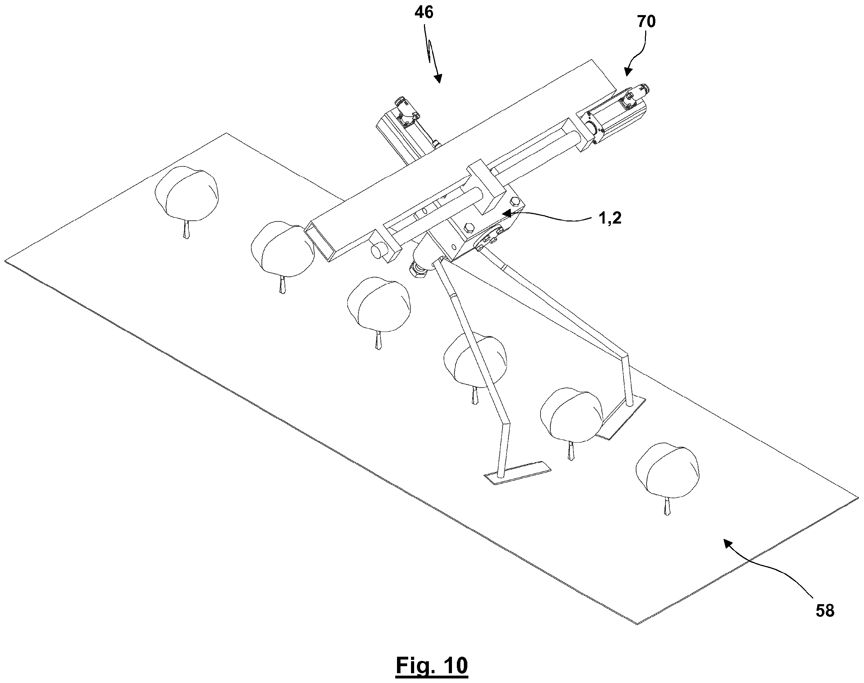

**Fig. 10** zeigt eine Ausführungsform, bei welcher die Querbearbeitungseinrichtung 46 neben dem Oszillationsantrieb 2 auch einen weiteren Antrieb 70 aufweist, der zwischen dem Fahrzeug und dem Doppeloszillationsantrieb 2 wirkt. Mittels des weiteren Antriebs 70 kann eine Bewegung des Oszillationsantriebs 2 in Querrichtung relativ zu dem Fahrzeug erfolgen, so dass mittels des weiteren Antriebs 70 eine Verstellung der Mittelstellung 64 möglich ist, während über dem Doppeloszillationsantrieb 2 dann die Öffnungs- und Schließstellungen 65 bis 68 relativ zu der Mittelstellung verändert werden können.

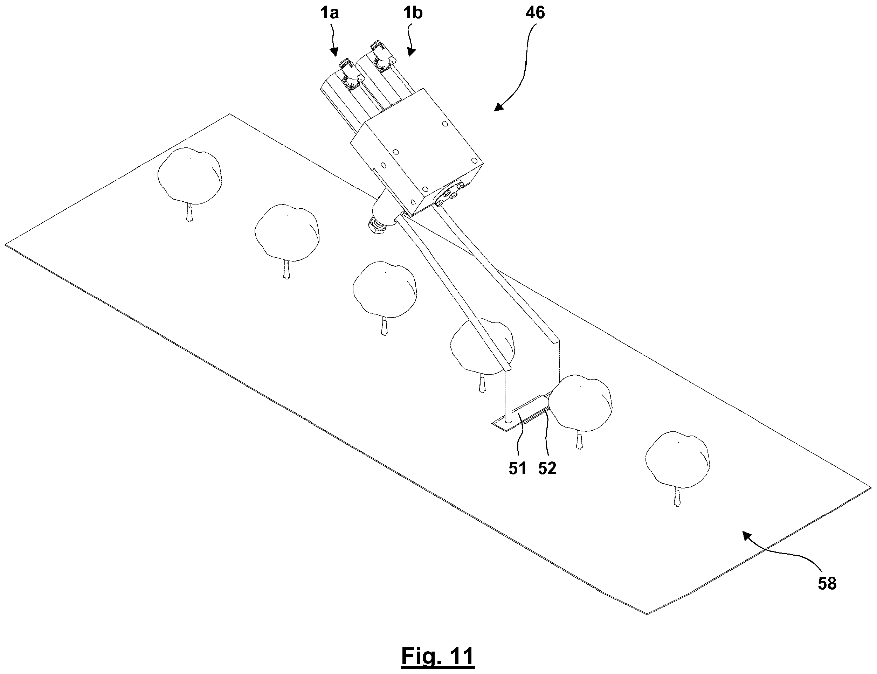

**Fig. 11** zeigt eine Querbearbeitungseinrichtung 46, bei welcher nicht ein Doppeloszillationsantrieb 2 eingesetzt ist, sondern vielmehr jedem Bearbeitungswerkzeug 51, 52 ein gesonderter Oszillationsantrieb 1a, 1b zugeordnet ist. Hierbei verfügen die Oszillationsantriebe 1a, 1b jeweils über eine einzige Abtriebswelle 7, 8 , die dann über den zugeordneten Haltekörper 47, 48 und die Schwenkarme 49, 50 mit dem Bearbeitungswerkzeugen 51, 52 in Antriebsverbindung stehen. Hierbei können die Oszillationsantriebe 1a, 1b entsprechend den Doppeloszillationsantrieb 2 mit dem Spindeltrieb 10 und dem Antriebselement 21 ausgebildet sein, wobei dann aber in den einzelnen Oszillationsantrieben 1a, 1b jeweils die einzige zugeordnete Abtriebswelle 7, 8 lediglich über einen einzigen Kniehebeltrieb 11, 12 mit dem Antriebselement 21 in Antriebsverbindung steht. Die beiden Oszillationsantriebe 1a, 1b können mittels einer gemeinsamen Steuereinrichtung oder auch separaten Steuereinrichtungen unabhängig voneinander angesteuert werden, so dass je nach Ansteuerung der Oszillationsantriebe 1a, 1b individuell die Schließstellungen 65, 66, die Öffnungsstellungen 67, 68 und eine Mittelstellung 64 vorgegeben werden können. Die beiden Oszillationsantriebe 1a, 1b können wie dargestellt eine Baueinheit bilden.

### BEZUGSZEICHENLISTE

- 1: Oszillationsantrieb
- 2: Doppeloszillationsantrieb
- 3: Getriebemodul
- 4: Gehäuse
- 5: Antriebsmotor
- 6: Antriebswelle
- 7: Abtriebswelle
- 8: Abtriebswelle
- 9: Antriebsverbindung
- 10: Spindeltrieb
- 11: Kniehebeltrieb
- 12: Kniehebeltrieb
- 13: Spindel
- 14: Abflachung
- 15: Abflachung
- 16: Ausnehmung Spindel
- 17: axiales Lager
- 18: Außengewinde
- 19: Innengewinde
- 20: Spindelmutter
- 21: Antriebselement
- 22: Gleitlager
- 23: Gleitlager
- 24: Dichtung
- 25: Dichtung
- 26: Schwinge
- 27: Schwinge
- 28: Kniehebel
- 29: Kniehebel
- 30: Kniegelenk
- 31: Kniegelenk
- 32: Kniehebel
- 33: Kniehebel
- 34: Schwenklager
- 35: Schwenklager
- 36: Schließstellung
- 37: Kniewinkel
- 38: Kugel
- 39: Ausnehmung
- 40: Sensor
- 41: Hall-Sensor
- 42: Permanentmagnet
- 43: Empfangs- und/oder Verarbeitungsmodul
- 44: Anschlag
- 45: Öffnungsstellung
- 46: Querbearbeitungseinrichtung
- 47: Haltekörper
- 48: Haltekörper
- 49: Schwenkarm
- 50: Schwenkarm
- 51: Bearbeitungswerkzeug
- 52: Bearbeitungswerkzeug
- 53: Längsrichtung
- 54: Bearbeitungsfläche
- 55: Öffnungs- und Schließbewegung
- 56: Öffnungs- und Schließbewegung
- 57: Bearbeitungsfläche
- 58: Pflanzreihe
- 59: Pflanze
- 60: Steuereinrichtung
- 61: Kamera
- 62: Erfassungseinrichtung
- 63: Beobachtungsfeld
- 64: Mittelstellung
- 65: Schließstellung
- 66: Schließstellung
- 67: Öffnungsstellung
- 68: Öffnungsstellung
- 69: lateraler Versatz
- 70: weiterer Antrieb

## Patentansprüche

1. Landwirtschaftliche Querbearbeitungseinrichtung (46) zum Bearbeiten von zwischen Pflanzen (59) einer Pflanzreihe (58) angeordnetem Bewuchs mit
a) einem in eine Querrichtung oszillierend bewegbaren Bearbeitungswerkzeug (51; 52) und
b) einem Oszillationsantrieb (1), über welchen das Bearbeitungswerkzeug (51; 52) oszillierend zwischen einer Öffnungsstellung (67; 68) und einer Schließstellung (65, 66) bewegbar ist,
c) einer Erfassungseinrichtung (62) , die Informationen hinsichtlich der Pflanzen (59) und/oder des Bewuchses zwischen den Pflanzen (59) erfasst, **dadurch gekennzeichnet, dass**
d) eine Steuereinrichtung (60) vorhanden ist, welche den Oszillationsantrieb (1) so ansteuert, dass
da) ein Öffnungs- und/oder Schließhub des Bearbeitungswerkzeugs,
db) eine Öffnungsstellung (67; 68) des Bearbeitungswerkzeugs (51; 52) und/oder
dc) eine Schließstellung (65, 66) des Bearbeitungswerkzeugs (51; 52) und/oder
dd) eine Mittelstellung (64) zwischen dem Bearbeitungswerkzeug (51) und einem benachbarten Bearbeitungswerkzeug (52)
in Abhängigkeit von den mittels der Erfassungseinrichtung (62) erfassten Informationen veränderbar sind/ist.

2. Querbearbeitungseinrichtung (1) nach Anspruch 1, **dadurch gekennzeichnet, dass** Steuerlogik vorhanden ist, welche
a) aus den mittels der Erfassungseinrichtung (62) erfassten Informationen
aa) eine Abmessung einer Pflanze (59) der Pflanzreihe (58) und/oder
ab) einen lateralen Versatz (69) einer Pflanze (59) in der Pflanzreihe (58) und/oder
ac) eine Position einer Pflanze einer benachbarten Pflanzreihe und/oder
ad) eine Position eines Hindernisses
ermittelt und
b) den Oszillationsantrieb (1) in Abhängigkeit hiervon so ansteuert, dass
ba) die Öffnungs- und/oder Schließhub des Bearbeitungswerkzeugs,
bb) die Öffnungsstellung (67; 68) des Bearbeitungswerkzeugs (51; 52) und/oder
bc) die Schließstellung (65; 66) des Bearbeitungswerkzeugs (51; 52) und/oder
bd) die Mittelstellung (64) zwischen dem Bearbeitungswerkzeug (51) und einem benachbarten Bearbeitungswerkzeug (52)
verändert werden/wird.

3. Querbearbeitungseinrichtung (1) nach Anspruch 1 oder 2, **dadurch gekennzeichnet, dass**
a) ein erster Oszillationsantrieb (1a) und ein zweiter Oszillationsantrieb (1b) vorhanden sind, wobei mittels des ersten Oszillationsantriebs (1a) ein erstes Bearbeitungswerkzeug (51) angetrieben ist und mittels des zweiten Oszillationsantriebs (1b) ein zweites Bearbeitungswerkzeug (52) angetrieben ist,
b) wobei
ba) der erste Oszillationsantrieb (1a) von der Steuereinrichtung (60) so angesteuert ist, dass der Öffnungshub des ersten Bearbeitungswerkzeugs (51), der Schließhub des ersten Bearbeitungswerkzeugs (51), die Öffnungsstellung (67) des ersten Bearbeitungswerkzeugs (51), die Schließstellung (65) des ersten Bearbeitungswerkzeugs (51) und/oder die Mittelstellung (64) zwischen dem ersten Bearbeitungswerkzeug (51) und dem zweiten Bearbeitungswerkzeug (51) von mittels der Erfassungseinrichtung (62) erfassten Informationen hinsichtlich der Pflanzen (59) und/oder des Bewuchses zwischen den Pflanzen (59) abhängig ist, und/oder
bb) der zweite Oszillationsantrieb (1b) von der Steuereinrichtung (60) so angesteuert ist, dass der Öffnungshub des zweiten Bearbeitungswerkzeugs (52), der Schließhub des zweiten Bearbeitungswerkzeugs (52), die Öffnungsstellung (68) des zweiten Bearbeitungswerkzeugs (52), die Schließstellung (66) des zweiten Bearbeitungswerkzeugs (52) und/oder die Mittelstellung (64) zwischen dem ersten Bearbeitungswerkzeug (51) und dem zweiten Bearbeitungswerkzeug (52) von mittels der Erfassungseinrichtung (62) erfassten Informationen hinsichtlich der Pflanzen (59) und/oder des Bewuchses zwischen den Pflanzen (59) abhängig ist.

4. Querbearbeitungseinrichtung (46) nach einem der vorhergehenden Ansprüche, **dadurch gekennzeichnet, dass** der oder mindestens ein Oszillationsantrieb (1) aufweist:
a) einen Antriebsmotor (5),
b) eine Abtriebswelle (7; 8) und
c) eine Antriebsverbindung (9), die den Antriebsmotor (5) mit der Abtriebswelle (7; 8) derart koppelt, dass die Abtriebswelle (7; 8) hin- und hergehende Drehbewegungen ausführt,
d) wobei die Antriebsverbindung (9) oder der Antriebsmotor (5) so ausgestaltet ist, dass ein Antriebselement (21) mit einer translatorischen Hin- und Herbewegung angetrieben wird, und das Antriebselement (21) über einen Kniehebeltrieb (11; 12) mit der Abtriebswelle (7; 8) gekoppelt ist.

5. Querbearbeitungseinrichtung (46) nach Anspruch 1, 2 oder 4, **dadurch gekennzeichnet, dass** der Oszillationsantrieb (1) ein Doppeloszillationsantrieb (2) ist, der eine erste Abtriebswelle (7) und eine zweite Abtriebswelle (8) aufweist, wobei die erste Abtriebswelle (7) ein erstes Bearbeitungswerkzeug (51) antreibt, die zweite Abtriebswelle (8) ein zweites Bearbeitungswerkzeug (52) antreibt und der Doppeloszillationsantrieb (2) von der Steuereinrichtung (60) so angesteuert ist, dass die Öffnungsstellungen (67, 68) und/oder die Schließstellungen (65, 66) des ersten Bearbeitungswerkzeugs (51) und des zweiten Bearbeitungswerkzeugs (52) von mittels der Erfassungseinrichtung (62) erfassten Informationen hinsichtlich der Pflanzen (59) und/oder des Bewuchses zwischen den Pflanzen (59) abhängig sind.

6. Querbearbeitungseinrichtung (46) nach Anspruch 5, **dadurch gekennzeichnet, dass** ein weiterer Antrieb (70) vorhanden ist, mittels dessen eine Veränderung einer Mittelstellung (64) des Doppeloszillationsantriebs (2) herbeiführbar ist.

7. Querbearbeitungseinrichtung (46) nach Anspruch 5 oder 6, **dadurch gekennzeichnet, dass** der Doppeloszillationsantrieb (2) aufweist
a) einen Antriebsmotor (5),
b) eine Antriebsverbindung (9), die den Antriebsmotor (5) mit der ersten Abtriebswelle (7) und der zweiten Abtriebswelle (8) derart koppelt, dass die erste Abtriebswelle (7) und die zweite Abtriebswelle (8) entgegengesetzt zueinander orientierte und hin- und hergehende Drehbewegungen ausführen,
c) wobei die Antriebsverbindung (9) oder der Antriebsmotor (5) so ausgestaltet ist, dass ein Antriebselement (21) mit einer translatorischen Hin- und Herbewegung angetrieben wird und das Antriebselement (21) jeweils über einen Kniehebeltrieb (11, 12) mit einer zugeordneten Abtriebswelle (7, 8) gekoppelt ist.

8. Querbearbeitungseinrichtung (46) nach einem der vorhergehenden Ansprüche, **dadurch gekennzeichnet, dass** der Oszillationsantrieb (1) einen Spindeltrieb (10) aufweist.

9. Querbearbeitungseinrichtung (46) nach einem der vorhergehenden Ansprüche, **dadurch gekennzeichnet, dass** in dem Oszillationsantrieb (1) ein Anschlag (44) vorhanden ist, der eine Anschlagstellung vorgibt, und eine oder die Steuereinrichtung (60) Steuerlogik aufweist, die den Oszillationsantrieb (1) in die Anschlagstellung steuert und in der Anschlagstellung eine Referenzierung des oder eines Antriebsmotors (5) und/oder eines Sensors (40) vornimmt.

10. Querbearbeitungseinrichtung (46) nach Anspruch 9 in Rückbeziehung auf Anspruch 8, **dadurch gekennzeichnet, dass** die Anschlagstellung durch eine Abstützung einer Stirnseite einer Spindel (13) des Spindeltriebs (10) über eine Kugel (38) an einer Kontaktfläche einer Spindelmutter (20) vorgegeben ist.

11. Querbearbeitungseinrichtung (46) nach einem der vorhergehenden Ansprüche, **dadurch gekennzeichnet, dass** ein Sensor (40) vorhanden ist, welcher die Bewegung des Oszillationsantriebs (1) erfasst.

12. Querbearbeitungseinrichtung (46) nach Anspruch 11, **dadurch gekennzeichnet, dass** der Sensor (40) die translatorische Bewegung des oder eines Antriebselements (21) erfasst.

13. Querbearbeitungseinrichtung (46) nach Anspruch 12, **dadurch gekennzeichnet, dass** der Sensor (40) ein Hall-Sensor (41) ist.

## Claims

1. Agricultural transversal processing device (46) for processing ground cover arranged between plants (59) of a plant row (58) comprising
a) a processing tool (51; 52) being movable for an oscillating movement in transversal direction and
b) an oscillation drive (1) by which it is possible to move the processing tool (51; 52) in an oscillating fashion between an open position (67; 68) and a closed position (65, 66),
c) a capturing device (62) which captures information concerning the plants (59) and/or the ground cover located between the plants (59),
**characterised in that**
d) a control device (60) is provided which controls the oscillation drive (1) in a way such that it is possible to change
da) an opening stroke and/or a closing stroke of the processing tool,
db) an open position (67; 68) of the processing tool (51; 52) and/or
dc) a closed position (65, 66) of the processing tool (51; 52) and/or
dd) a centre position (64) between the processing tool (51) and an adjacent processing tool (52)
dependent on the information captured by the capturing device (62).

2. Transversal processing device (1) of claim 1, **characterised in that** control logic is provided which
a) determines
aa) a dimension of a plant (59) of the plant row (58) and/or
ab) a lateral offset (69) of a plant (59) in the plant row (58) and/or
ac) a position of a plant of an adjacent plant row and/or
ad) a position of an obstacle
on the basis of the information captured by the capturing device (62) and
b) controls the oscillation drive (1) in dependence therefrom in a way such that
ba) the opening stroke and/or the closing stroke of the processing tool,
bb) the open position (67; 68) of the processing tool (51; 52) and/or
bc) the closed position (65; 66) of the processing tool (51; 52) and/or
bd) the centre position (64) between the processing tool (51) and an adjacent processing tool (52)
is changed.

3. Transversal processing device (1) of claim 1 or 2, **characterised in that**
a) a first oscillation drive (1a) and a second oscillation drive (1b) are provided, a first processing tool (51) being driven by the first oscillation drive (1a) and a second processing tool (52) being driven by the second oscillation drive (1b),
b) wherein
ba) the first oscillation drive (1a) is controlled by the control device (60) in a way such that the opening stroke of the first processing tool (51), the closing stroke of the first processing tool (51), the open position (67) of the first processing tool (51), the closed position (65) of the first processing tool (51) and/or the centre position (64) between the first processing tool (51) and the second processing tool (51) depends on information concerning the plants (59) and/or the ground cover between the plants (59) captured by the capturing device (62) and/or
bb) the second oscillation drive (1b) is controlled by the control device (60) in a way such that the opening stroke of the second processing tool (52), the closing stroke of the second processing tool (52), the open position (68) of the second processing tool (52), the closed position (66) of the second processing tool (52) and/or the centre position (64) between the first processing tool (51) and the second processing tool (52) depends on information concerning the plants (59) and/or the ground cover between the plants (59) captured by the capturing device (62).

4. Transversal processing device (46) of one of the preceding claims, **characterised in that** the or at least one oscillation drive (1) comprises:
a) a drive motor (5),
b) an output shaft (7; 8) and
c) a driving connection (9) which couples the drive motor (5) to the output shaft (7; 8) in a way such that the output shaft (7; 8) executes reciprocating rotational movements,
d) the driving connection (9) or the drive motor (5) being designed such that a driving element (21) is driven by a translatory reciprocating movement and the driving element (21) is coupled by a toggle lever drive (11; 12) to the output shaft (7; 8).

5. Transversal processing device (46) of claim 1, 2 or 4, **characterised in that** the oscillation drive (1) is a double oscillation drive (2) which comprises a first output shaft (7) and a second output shaft (8), the first output shaft (7) driving a first processing tool (51), the second output shaft (8) driving a second processing tool (52) and the double oscillation drive (2) being controlled by the control device (60) in a way such that the open positions (67, 68) and/or the closed positions (65, 66) of the first processing tool (51) and of the second processing tool (52) depend on information concerning the plants (59) and/or the ground cover between the plants (59) captured by the capturing device (62).

6. Transversal processing device (46) of claim 5, **characterised in that** another drive (70) is provided by which it is possible to induce a change of a centre position (64) of the double oscillation drive (2).

7. Transversal processing device (46) of claim 5 or 6, **characterised in that** the double oscillation drive (2) comprises
a) a drive motor (5),
b) a driving connection (9) which couples the drive motor (5) to the first output shaft (7) and to the second output shaft (8) in a way such that the first output shaft (7) and the second output shaft (8) execute reciprocating rotational movements having an orientation in opposite directions,
c) the driving connection (9) or the drive motor (5) being designed such that a driving element (21) is driven by a translatory reciprocating movement and the driving element (21) is coupled by toggle lever drives (11, 12) to associated output shafts (7, 8).

8. Transversal processing device (46) of one of the preceding claims, **characterised in that** the oscillation drive (1) comprises a spindle drive (10).

9. Transversal processing device (46) of one of the preceding claims, **characterised in that** the oscillation drive (1) comprises a stop (44) which defines a stop position and a or the control device (60) comprises control logic which controls the oscillation drive (1) into the stop position and which in the stop position performs a referencing of a or the drive motor (5) and/or a sensor (40).

10. Transversal processing device (46) of claim 9 when referring back to claim 8, **characterised in that** the stop position is defined by a contact or support of a front face of a spindle (13) of the spindle drive (10) via a ball (38) with or at a contact surface of a spindle nut (20).

11. Transversal processing device (46) of one of the preceding claims, **characterised in that** a sensor (40) is provided which senses the movement of the oscillation drive (1).

12. Transversal processing device (46) of claim 11, **characterised in that** the sensor (40) senses the translatory movement of the or a driving element (21).

13. Transversal processing device (46) of claim 12, **characterised in that** the sensor (40) is a Hall sensor (41).

## Revendications

1. Dispositif de traitement transversal agricole (46) pour le traitement de la végétation disposée entre les plantes (59) d'une rangée de plantes (58), avec
a) un outil de traitement (51 ; 52) mobile de manière oscillante dans une direction transversale et
b) un entraînement oscillant (1) par l'intermédiaire duquel l'outil de traitement (51 ; 52) est mobile de manière oscillante entre une position d'ouverture (67 ; 68) et une position de fermeture (65, 66),
c) un dispositif de détection (62) qui détecte des informations concernant les plantes (59) et/ou de la végétation entre les plantes (59),
**caractérisé en ce que**
d) un dispositif de commande (60) est présent, qui contrôle l'entraînement oscillant (1) de façon à ce que
da) une course d'ouverture et/ou de fermeture de l'outil de traitement,
db) une position d'ouverture (67 ; 68) de l'outil de traitement (51 ; 52) et/ou
dc) une position de fermeture (65, 66) de l'outil de traitement (51 ; 52) et/ou
dd) une position centrale (64) entre l'outil de traitement (51) et un outil de traitement adjacent (52)
puisse être modifiée en fonction des informations détectées au moyen du dispositif de détection (62).

2. Dispositif de traitement transversal (1) selon la revendication 1, **caractérisé en ce qu'**une logique de commande est présente, qui
a) à partir des informations détectées au moyen du dispositif de détection (62), détermine
aa) une dimension d'une plante (59) de la rangée de plantes (58) et/ou
ab) un décalage latéral (69) d'une plante (59) de la rangée de plantes (58) et/ou
ac) une position d'une plante d'une rangée de plantes adjacente et/ou
ad) une position d'un obstacle
et
b) contrôle l'entraînement oscillant (1) en fonction de ces éléments, de façon à ce que
ba) la course d'ouverture et/ou de fermeture de l'outil de traitement,
bb) la position d'ouverture (67 ; 68) de l'outil de traitement (51 ; 52) et/ou
bc) la position de fermeture (65, 66) de l'outil de traitement (51 ; 52) et/ou
bd) la position centrale (64) entre l'outil de traitement (51) et un outil de traitement adjacent (52)
soit modifiée.

3. Dispositif de traitement transversal (1) selon la revendication 1 ou 2, **caractérisé en ce que**
a) un premier entraînement oscillant (1a) et un deuxième entraînement oscillant (1b) sont présents, dans lequel, au moyen du premier entraînement oscillant (1a), un premier outil de traitement (51) est entraîné et, au moyen du deuxième entraînement oscillant (1b), un deuxième outil de traitement (52) est entraîné,
b) dans lequel
ba) le premier entraînement oscillant (1a) est contrôlé par le dispositif de commande (60) de façon à ce que la course d'ouverture du premier outil de traitement (51), la course de fermeture du premier outil de traitement (51), la position d'ouverture (67) du premier outil de traitement (51), la position de fermeture (65) du premier outil de traitement (51) et/ou la position centrale (64) entre le premier outil de traitement (51) et le deuxième outil de traitement (51) dépend des informations, détectées au moyen du dispositif de détection (62), concernant les plantes (59) et/ou la végétation entre les plantes (59) et/ou
bb) le deuxième entraînement oscillant (1b) est contrôlé par le dispositif de commande (60) de façon à ce que la course d'ouverture du deuxième outil de traitement (52), la course de fermeture du deuxième outil de traitement (52), la position d'ouverture (68) du deuxième outil de traitement (52), la position de fermeture (66) du deuxième outil de traitement (52) et/ou la position centrale (64) entre le premier outil de traitement (51) et le deuxième outil de traitement (52) dépend des informations, détectées au moyen du dispositif de détection (62), concernant les plantes (59) et/ou la végétation entre les plantes (59).

4. Dispositif de traitement transversal (46) selon l'une des revendications précédentes, **caractérisé en ce que** le ou au moins un entraînement oscillant (1) comprend :
a) un moteur d'entraînement (5),
b) un arbre de sortie (7 ; 8) et
c) une liaison d'entraînement (9) qui couple le moteur d'entraînement (5) avec l'arbre de sortie (7 ; 8) de façon à ce que l'arbre de sortie (7 ; 8) effectue des mouvements rotatifs de va-et-vient,
d) dans lequel la liaison d'entraînement (9) ou le moteur d'entraînement (5) est conçu de façon à ce qu'un élément d'entraînement (21) soit entraîné avec un mouvement translatif de va-et-vient et l'élément d'entraînement (21) est couplé, par l'intermédiaire d'une transmission à genouillère (11 ; 12), avec l'arbre de sortie (7 ; 8).

5. Dispositif de traitement transversal (46) selon la revendication 1, 2, ou 4, **caractérisé en ce que** l'entraînement oscillant (1) est un double entraînement oscillant (2) qui comprend un premier arbre de sortie (7) et un deuxième arbre de sortie (8), dans lequel le premier arbre de sortie (7) entraîne un premier outil de traitement (51), le deuxième arbre de sortie (8) entraîne un deuxième outil de traitement (52) et le double entraînement oscillant (2) est contrôlé par le dispositif de commande (60) de façon à ce que les positions d'ouverture (67, 68) et/ou les positions de fermeture (65, 66) du premier outil de traitement (51) et du deuxième outil de traitement (52) dépendent des informations, détectées au moyen du dispositif de détection (62), concernant les plantes (59) et/ou la végétation entre les plantes (59).

6. Dispositif de traitement transversal (46) selon la revendication 5, **caractérisé en ce qu'**un autre entraînement (70) est présent, au moyen duquel une modification d'une position centrale (64) du double entraînement oscillant (2) peut être effectuée.

7. Dispositif de traitement transversal (46) selon la revendication 5 ou 6, **caractérisé en ce que** le double entraînement oscillant (2) comprend
a) un moteur d'entraînement (5),
b) une liaison d'entraînement (9) qui couple le moteur d'entraînement (5) avec le premier arbre de sortie (7) et le deuxième arbre de sortie (8) de façon à ce que le premier arbre de sortie (7) et le deuxième arbre de sortie (8) effectuent des mouvements rotatifs de va-et-vient opposés entre eux,
c) dans lequel la liaison d'entraînement (9) ou le moteur d'entraînement est conçu de façon à ce qu'un élément d'entraînement (21) soit entraîné avec un mouvement translatif de va-et-vient et l'élément d'entraînement (21) est couplé, respectivement par l'intermédiaire d'une transmission à genouillère (11, 12), avec un arbre de sortie (7, 8) correspondant.

8. Dispositif de traitement transversal (46) selon l'une des revendications précédentes, **caractérisé en ce que** l'entraînement oscillant (1) comprend une transmission à broche (10).

9. Dispositif de traitement transversal (46) selon l'une des revendications précédentes, **caractérisé en ce que**, dans l'entraînement oscillant (1), une butée (44) est prévue, qui prédétermine une position de butée et un ou le dispositif de commande (60) comprend une logique de commande qui contrôle l'entraînement oscillant (1) vers la position de butée et qui effectue, dans la position de butée, un référencement du ou d'un moteur d'entraînement (5) et/ou d'un capteur (40).

10. Dispositif de traitement transversal (46) selon la revendication 9, en relation avec la revendication 8, **caractérisé en ce que** la position de butée est prédéterminée par un appui d'une face frontale d'une broche (13) de la transmission à broche (10) par l'intermédiaire d'une bille (38) contre une surface de contact d'un écrou de broche (20).

11. Dispositif de traitement transversal (46) selon l'une des revendications précédentes, **caractérisé en ce qu'**un capteur (40) est prévu, qui détecte le mouvement de l'entraînement oscillant (1).

12. Dispositif de traitement transversal (46) selon la revendication 11, **caractérisé en ce que** le capteur (40) détecte le mouvement translatif du ou d'un élément d'entraînement (21).

13. Dispositif de traitement transversal (46) selon la revendication 12, **caractérisé en ce que** le capteur (40) est un capteur à effet Hall (41).
